# EUROPEAN PATENT APPLICATION

(11) **EP 4 836 136 A1**
(43) Date of publication of application: **04.11.2026**
(21) Application number: 24936627.9
(22) Date of filing: 12.09.2024
(51) Int. Cl.: H01M 50/244

(54) **BATTERY AND ELECTRIC APPARATUS**

(30) Priority: 23.04.2024 CN 202420855007 U
(71) Applicant: Contemporary Amperex Technology Co., Limited, Ningde, Fujian 352100 (CN)
(72) Inventor: LONG, Chao, Ningde, Fujian 352100 (CN); CHEN, Xingdi, Ningde, Fujian 352100 (CN); ZHANG, Wenhui, Ningde, Fujian 352100 (CN); WANG, Peng, Ningde, Fujian 352100 (CN); HUANG, Jian, Ningde, Fujian 352100 (CN)
(74) Representative: Kraus & Lederer PartGmbB
(86) International application number: PCT/CN2024/118615
(87) International publication number: WO 2025/222735

(57) **Abstract**

Provided are a battery (100) and an electric apparatus, which belong to the technical field of batteries. The battery (100) comprises a case (10), battery cell groups (20) and support members (30). The case (10) comprises a bottom plate (11). The battery cell groups (20) are accommodated in the case (10), and each battery cell group comprises at least one battery cell (21), the battery cell (21) comprising a casing (211), electrode terminals (212) and a pressure relief mechanism (213). The casing (211) has a wall portion (2111), wherein the wall portion (2111) is arranged to face the bottom plate (11) in the thickness direction of the bottom plate (11); and both the electrode terminals (212) and the pressure relief mechanism (213) are disposed on the casing (211), and at least one of the electrode terminals (212) and the pressure relief mechanism (213) is disposed on the wall portion (2111). The support members (30) are arranged between the wall portion (2111) and the bottom plate (11) and are connected to the wall portion (2111), and in the thickness direction of the bottom plate (11), each support member (30) has a first surface (31) facing away from the wall portion (2111), wherein the first surface (31) is closer to the bottom plate (11) than the electrode terminals (212) and the pressure relief mechanism (213). The support members (30) can protect the electrode terminals (212) or the pressure relief mechanism (213) of the battery cell (21), so as to reduce the risk of the battery cell (21) being damaged by impact, thereby facilitating the improvement of the service life and use reliability of the battery (100).

## Description

### CROSS-REFERENCE TO RELATED APPLICATIONS

This application claims priority to Chinese Patent Application No. 2024208550070, filed on April 23, 2024 and entitled "BATTERY AND ELECTRIC APPARATUS", which is incorporated herein by reference in its entirety.

### TECHNICAL FIELD

This application relates to the field of battery technologies, and specifically to a battery and an electric apparatus.

### BACKGROUND

In recent years, new energy vehicles have experienced leapfrog development. In the field of electric vehicles, traction batteries, as a power source of electric vehicles, play an irreplaceable and important role. A battery is constituted by a box and battery cells accommodated in the box. As a core component of new energy vehicles, batteries have high requirements in terms of both service life and usage reliability. Generally, a battery includes a box and a plurality of battery cells accommodated in the box. A housing of a battery cell is provided with electrode terminals for inputting or outputting electrical energy. The electrode terminals exceed an outer surface of the housing, and the housing of the battery cell is further provided with a pressure relief mechanism for relieving internal pressure. However, existing batteries are extremely prone to damage to the electrode terminals or pressure relief mechanisms of battery cells when subjected to impact during use, resulting in damage to the battery cells, which in turn leads to shorter service life and lower usage reliability of the batteries.

### SUMMARY

Embodiments of this application provide a battery and an electric apparatus, so as to effectively prolong service life and improve usage reliability of the battery.

According to a first aspect, an embodiment of this application provides a battery, including a box, a battery cell group, and a support member. The box includes a bottom plate. The battery cell group is accommodated in the box, and the battery cell group includes at least one battery cell. The battery cell includes a housing, electrode terminals, and a pressure relief mechanism. The housing has a wall portion. The wall portion is disposed facing the bottom plate in a thickness direction of the bottom plate. Both the electrode terminals and the pressure relief mechanism are disposed on the housing, and at least one of the electrode terminals and the pressure relief mechanism is disposed on the wall portion. The support member is disposed between the wall portion and the bottom plate and connected to the wall portion. In the thickness direction of the bottom plate, the support member has a first surface facing away from the wall portion, and the first surface is closer to the bottom plate than the electrode terminals and the pressure relief mechanism.

In the foregoing technical solution, the box has a bottom plate located at the bottom of the battery cell, the wall portion of the housing is disposed facing the bottom plate, and at least one of the electrode terminals and the pressure relief mechanism of the battery cell is disposed on the wall portion, so that at least one of the electrode terminals and the pressure relief mechanism is disposed on a side of the housing facing the bottom plate. The support member is disposed between the bottom plate of the box and the wall portion of the housing, the support member is connected to the wall portion, and the first surface of the support member facing away from the wall portion is closer to the bottom plate than the electrode terminal and the pressure relief mechanism. In the battery with such structure, on one hand, the support member can support the bottom plate of the box to some extent when the battery is subjected to bottom impact during a bottom ball impact test or during use, which improves the deformation resistance of the bottom plate when subjected to external impact, thereby helping to alleviate the phenomenon that the bottom plate impacts or strikes the battery cell due to deformation. On the other hand, when the bottom plate of the box is impacted or deformed, an impact force received by the bottom plate can preferentially come into contact with the support member, and the impact force received by the bottom plate can be dispersed through the support member, increasing a force-bearing area, so as to alleviate the phenomenon that the impact force received by the bottom plate is concentrated on the battery cell, thereby reducing the situation of local force concentration on the battery cell, improving the protection effect on the electrode terminals or pressure relief mechanism of the battery cell, and thus effectively reducing the risk of the electrode terminals or pressure relief mechanism of the battery cell being damaged by impact. This can also reduce the risk of leakage, fire, or explosion of the battery cell, which helps to prolong the service life and improve the usage reliability of the battery.

In some embodiments, in the thickness direction of the bottom plate, the first surface abuts against the bottom plate.

In the foregoing technical solution, the first surface abutting against the bottom plate allows the support member to have a structure in which two sides in the thickness direction of the bottom plate respectively abut against the wall portion of the housing and the bottom plate of the box. The battery with such structure can reduce a gap size between the support member and the bottom plate. On one hand, this can improve the internal space utilization of the battery, helping to increase the energy density of the battery. On the other hand, this can improve the supporting effect on the bottom plate by the support member, further improving the deformation resistance of the bottom plate when subjected to external impact, which helps to alleviate the phenomenon that the bottom plate impacts or strikes the battery cell due to deformation.

In some embodiments, the battery cell group includes a plurality of battery cells, the plurality of battery cells are stacked in a first direction, and the first direction is perpendicular to the thickness direction of the bottom plate. The support member extends along the first direction, and the support member is connected to the wall portions of the housings of the plurality of battery cells in the battery cell group.

In the foregoing technical solution, the battery cell group is provided with a plurality of battery cells stacked in the first direction. The support member is arranged as a structure extending along the first direction, and the support member is connected to the wall portions of the plurality of battery cells in the battery cell group, so that the support member can support and protect the plurality of battery cells in the battery cell group, thus supporting and protecting the plurality of battery cells in the battery cell group using a single support member while increasing the electric capacity of the battery without the need to provide a corresponding support member for each battery cell, thereby effectively reducing the manufacturing cost of the battery and helping to reduce the assembly difficulty of the battery to improve the assembly efficiency of the battery.

In some embodiments, the battery includes a plurality of battery cell groups, the plurality of battery cell groups are disposed in a second direction, and the second direction is perpendicular to the thickness direction of the bottom plate and the first direction. In the second direction, every two adjacent battery cell groups share one support member, and the support member is connected to the wall portions of the housings of the battery cells in the two adjacent battery cell groups.

In the foregoing technical solution, in the second direction, every two adjacent battery cell groups share one support member, and the support member is connected to the wall portions of the plurality of battery cells in the two adjacent battery cell groups. In the battery with such structure, on one hand, one support member can support and protect the plurality of battery cells in the two adjacent battery cell groups, which helps to reduce the manufacturing cost of the battery. On the other hand, this enables the support member to distribute an impact force received by the bottom plate to the plurality of battery cells in the two adjacent battery cell groups, thereby further alleviating the phenomenon that the impact force received by the bottom plate is concentrated on the battery cell, further reducing the situation of local force concentration on the battery cell, thus further improving the protection effect on the electrode terminals or pressure relief mechanism of the battery cell, and reducing the risk of the electrode terminals or pressure relief mechanism of the battery cell being damaged by impact.

In some embodiments, a cavity is formed inside the support member, and the cavity penetrates both ends of the support member in the first direction.

In the foregoing technical solution, a cavity being provided inside the support member and the cavity penetrating both ends of the support member in the first direction can reduce the molding difficulty of the cavity of the support member while achieving weight reduction of the support member and enabling the support member to have a crash energy absorption capability when subjected to a large impact force, which helps to reduce the manufacturing difficulty of the support member.

In some embodiments, a cavity is formed inside the support member.

In the foregoing technical solution, a cavity is provided inside the support member. On one hand, a weight of the support member can be reduced, which helps to increase the energy density of the battery. On the other hand, this enables the support member to have a crash energy absorption capability when subjected to a large impact force, which helps to enhance the protection effect on the battery cell by the support member.

In some embodiments, the support member is connected to the wall portion by adhesive.

In the foregoing technical solution, the support member and the wall portion of the housing are connected by an adhesive connection structure. On one hand, this facilitates assembly and helps to reduce the connection difficulty between the support member and the wall portion of the housing. On the other hand, this allows the connection and assembly between the support member and the wall portion of the housing not to affect the battery cell, which helps to alleviate the phenomenon that the support member damages the battery cell.

In some embodiments, an elastic modulus of a material of the support member is greater than or equal to 1000 MPa.

In the foregoing technical solution, setting the elastic modulus of the material of the support member to be greater than or equal to 1000 MPa allows for sufficient rigidity of the support member, so that when the bottom plate is deformed due to impact, the supporting effect of the support member between the bottom plate and the battery cell can be improved, and allows for sufficient deformation resistance of the support member, so that the support member can better distribute and disperse a received impact force.

In some embodiments, the support member is made of an insulating material.

In the foregoing technical solution, arranging the support member to be made of an insulating material allows the battery cell not to form an electrical circuit connection with the support member, thereby reducing the risk of short circuit inside the battery, and helping to improve the usage reliability of the battery.

In some embodiments, the pressure relief mechanism is disposed on the wall portion; where in a plane perpendicular to the thickness direction of the bottom plate, an orthographic projection of the pressure relief mechanism does not overlap with an orthographic projection of the support member.

In the foregoing technical solution, the pressure relief mechanism and the support member are disposed with their orthographic projections in the plane perpendicular to the thickness direction of the bottom plate not overlapping, so that the support member does not cover or block the pressure relief mechanism in the thickness direction of the bottom plate, thereby reducing the blocking and interference of the support member on the pressure relief mechanism, and improving the smoothness of the pressure relief mechanism when relieving an internal pressure of the battery cell.

In some embodiments, both the electrode terminals and the pressure relief mechanism are disposed on the wall portion.

In the foregoing technical solution, both the electrode terminals and the pressure relief mechanism are disposed on the wall portion, so that both the electrode terminals and the pressure relief mechanism are located at an end of the housing of the battery cell facing the bottom plate in the thickness direction of the bottom plate, thereby facilitating assembly and manufacturing, and the support member can support and protect both the electrode terminals and the pressure relief mechanism.

In some embodiments, the electrode terminals are disposed on the wall portion; where the battery further includes a buffer member, and in the thickness direction of the bottom plate, the buffer member is disposed between the electrode terminals and the bottom plate, and at least part of projections of the electrode terminals are located within the buffer member.

In the foregoing technical solution, the battery is further provided with a buffer member. The buffer member is disposed between the electrode terminals and the bottom plate in the thickness direction of the bottom plate, and the buffer member covers at least part of the electrode terminals in the thickness direction of the bottom plate. On one hand, the buffer member can absorb an impact force transmitted by the bottom plate when the bottom plate is deformed due to impact, so as to reduce an impact force acting on the electrode terminals, thereby providing buffering and protection for the electrode terminals, further reducing the risk of the battery cell being damaged by impact, and helping to prolong the service life and improve the usage reliability of the battery. On the other hand, the buffer member can further improve the supporting effect on the bottom plate when the bottom plate is deformed due to impact, which further improves the deformation resistance of the bottom plate when subjected to external impact, helping to alleviate the phenomenon that the bottom plate impacts or strikes the battery cell due to deformation.

In some embodiments, in the thickness direction of the bottom plate, the buffer member covers the electrode terminals.

In the foregoing technical solution, the buffer member is arranged to cover the electrode terminals in the thickness direction of the bottom plate, so that the entire projections of the electrode terminals in the thickness direction of the bottom plate are located within the buffer member, which helps to further improve the buffering and protecting effect on the electrode terminals by the buffer member.

In some embodiments, the battery further includes a busbar. The busbar is disposed in the box, and in the thickness direction of the bottom plate, the busbar is connected to ends of the electrode terminals facing the bottom plate to be electrically connected to the battery cell. In the thickness direction of the bottom plate, the first surface is closer to the bottom plate than the busbar, and the buffer member is disposed between the busbar and the bottom plate.

In the foregoing technical solution, a busbar is further provided in the box of the battery. The busbar is connected to the electrode terminals to realize input or output of electrical energy of the battery cell. The busbar is connected to the ends of the electrode terminals facing the bottom plate, and the buffer member is disposed between the busbar and the bottom plate. On one hand, this facilitates the assembly and connection of the busbar and the electrode terminals, helping to reduce the assembly difficulty between the busbar and the electrode terminals. On the other hand, the buffer member can also provide buffering and protection for the busbar to some extent. In addition, the first surface arranged to be closer to the bottom plate than the busbar allows the support member to also support and protect the busbar to some extent.

In some embodiments, in the thickness direction of the bottom plate, two sides of the buffer member respectively abut against the busbar and the bottom plate.

In the foregoing technical solution, two sides of the buffer member in the thickness direction of the bottom plate are arranged to respectively abut against the busbar and the bottom plate, so that a gap size between the buffer member and the bottom plate can be reduced. On one hand, this can improve the internal space utilization of the battery, helping to increase the energy density of the battery. On the other hand, this can improve the buffering effect on the busbar and the electrode terminals by the buffer member, and further improve the supporting effect on the bottom plate by the buffer member, thus further improving the deformation resistance of the bottom plate when subjected to external impact, and helping to alleviate the phenomenon that the bottom plate impacts or strikes the battery cell due to deformation.

In some embodiments, the battery cell group includes a plurality of battery cells, the plurality of battery cells are stacked in a first direction, the busbar connects the electrode terminals of the plurality of battery cells, and the first direction is perpendicular to the thickness direction of the bottom plate. The buffer member extends along the first direction, and in the thickness direction of the bottom plate, the buffer member covers the electrode terminals of the plurality of battery cells.

In the foregoing technical solution, the battery cell group is provided with a plurality of battery cells stacked in the first direction, and the busbar connects the electrode terminals of the plurality of battery cells to realize parallel or series connection between the plurality of battery cells, featuring a simple structure that is easy to implement. The buffer member is arranged in the structure extending along the first direction, and the buffer member covers the electrode terminals of the plurality of battery cells in the thickness direction of the bottom plate, allowing the buffer member to provide buffering and protection for the electrode terminals of the plurality of battery cells in the battery cell group, so that there is no need to provide a corresponding buffer member for the electrode terminals of each battery cell, which helps to reduce the manufacturing cost of the battery, reduce the assembly difficulty of the battery, and improve the assembly efficiency of the battery.

In some embodiments, the battery cell includes two electrode terminals with opposite polarities, the two electrode terminals are respectively a first electrode terminal and a second electrode terminal, the first electrode terminal and the second electrode terminal are spaced apart from each other on the wall portion in a second direction, and the second direction is perpendicular to the thickness direction of the bottom plate and the first direction. The battery cell group is correspondingly provided with two buffer members, the two buffer members are spaced apart from each other in the second direction, and in the thickness direction of the bottom plate, one buffer member covers the first electrode terminals of the plurality of battery cells, and the other buffer member covers the second electrode terminals of the plurality of battery cells.

In the foregoing technical solution, each battery cell is provided with a first electrode terminal and a second electrode terminal with opposite polarities to respectively perform input or output for the positive and negative electrodes of the battery cell. Two buffer members are correspondingly provided for each battery cell group, and one buffer member covers the first electrode terminals of the plurality of battery cells while the other buffer member covers the second electrode terminals of the plurality of battery cells, so that the two buffer members respectively provide buffering and protection for the first electrode terminals and second electrode terminals of the battery cells, featuring a simple structure that is easy to assemble.

In some embodiments, the buffer member is connected to the busbar.

In the foregoing technical solution, the buffer member is connected to the busbar to improve the reliability of the buffer member disposed between the bottom plate and the busbar. On one hand, this facilitates assembly of the buffer member between the bottom plate and the busbar, enabling the buffer member, the busbar, and the battery cell group to be first assembled into a whole and then assembled into the box, which helps to reduce the assembly difficulty of the buffer member and improve the assembly efficiency of the battery. On the other hand, this can alleviate the phenomenon that the buffer member falls off from between the bottom plate and the busbar, thereby improving the usage stability of the battery.

In some embodiments, the buffer member is connected to the busbar by adhesive.

In the foregoing technical solution, the buffer member and the busbar are connected by an adhesive connection structure. On one hand, this facilitates assembly and helps to reduce the connection difficulty between the buffer member and the busbar. On the other hand, this allows the connection and assembly between the buffer member and the busbar not to affect the busbar, which helps to alleviate the phenomenon that the buffer member damages the busbar.

In some embodiments, an elastic modulus of a material of the buffer member is greater than or equal to 3 MPa and less than or equal to 100 MPa.

In the foregoing technical solution, the elastic modulus of the material of the buffer member is greater than or equal to 3 MPa and less than or equal to 100 MPa. On one hand, the elastic modulus of the material of the buffer member is set to be greater than or equal to 3 MPa to alleviate the phenomenon of poor effect of absorbing an impact force by the buffer member due to the excessively soft buffer member, and alleviate the phenomenon of poor effect of the buffer member in distributing and dispersing an impact force. On the other hand, the elastic modulus of the material of the buffer member is set to be less than or equal to 100 MPa to alleviate the phenomenon that the buffer member directly transmits a received impact force to the electrode terminals due to excessively high rigidity of the buffer member, which helps to improve the buffering and protecting effect on the electrode terminal by the buffer member.

In some embodiments, the buffer member is made of an insulating material.

In the foregoing technical solution, arranging the buffer member to be made of an insulating material allows the electrode terminals of the battery cell not to form an electrical circuit connection with the buffer member, thereby reducing the risk of short circuit inside the battery, and helping to improve the usage reliability of the battery.

In some embodiments, the pressure relief mechanism is disposed on the wall portion; where in a plane perpendicular to the thickness direction of the bottom plate, an orthographic projection of the pressure relief mechanism does not overlap with an orthographic projection of the buffer member.

In the foregoing technical solution, the pressure relief mechanism and the buffer member are disposed with their orthographic projections in the plane perpendicular to the thickness direction of the bottom plate not overlapping, so that the buffer member does not cover or block the pressure relief mechanism in the thickness direction of the bottom plate, thereby reducing the blocking and interference of the buffer member on the pressure relief mechanism, and improving the smoothness of the pressure relief mechanism when relieving an internal pressure of the battery cell.

In some embodiments, the box further includes a top plate; where the top plate and the bottom plate are opposite each other in the thickness direction of the bottom plate and are respectively located on two sides of the battery cell. In the thickness direction of the bottom plate, the housing is connected to the top plate.

In the foregoing technical solution, the housing of the battery cell is connected to the top plate of the box to realize a structure in which the battery cell is suspended in the box. On one hand, a bearing force received by the bottom plate can be reduced, which helps to improve the load-bearing effect of the bottom plate. On the other hand, the phenomenon that the battery cell is pressed against the bottom plate through the support member can be alleviated, thereby optimizing the force condition of the support member, and further improving the supporting and protecting effect on the battery cell by the support member when the bottom plate is impacted.

In some embodiments, the housing is connected to the top plate by adhesive.

In the foregoing technical solution, the housing of the battery cell and the top plate of the box are connected by an adhesive connection structure. On one hand, this facilitates assembly and helps to reduce the connection difficulty between the housing of the battery cell and the top plate of the box. On the other hand, this allows the connection and assembly between the housing of the battery cell and the top plate of the box not to affect the battery cell, helping to alleviate the phenomenon that the battery cell is damaged.

In some embodiments, the housing includes a housing body and an end cover; where an accommodating cavity having an opening is formed inside the housing body, the accommodating cavity is configured to accommodate an electrode assembly, and the opening is located at an end of the housing body facing the bottom plate in the thickness direction of the bottom plate; and the end cover closes the opening. The end cover is the wall portion.

In the foregoing technical solution, the wall portion of the housing is arranged as the end cover of the housing used to close the opening. The battery cell with such structure facilitates assembly of the electrode terminals or pressure relief mechanism on the end cover, and can reduce the difficulty in electrical connection between the electrode terminals and the electrode assembly, thereby helping to reduce the manufacturing difficulty of the battery cell and improving the production efficiency of the battery cell.

In some embodiments, the housing includes a housing body and an end cover; where the housing body includes an integrally formed side wall and the wall portion, the side wall surrounds the wall portion, in the thickness direction of the bottom plate, the side wall has one end connected to the wall portion and the other end enclosing an opening, and the side wall and the wall portion jointly define an accommodating cavity for accommodating an electrode assembly; and the end cover closes the opening.

In the foregoing technical solution, the wall portion of the housing is arranged as the bottom wall of the housing body opposite the end cover in the thickness direction of the wall portion. The battery cell with such structure can implement that a region of the housing where the electrode terminals or pressure relief mechanism is disposed is away from the end cover. On one hand, this can alleviate the phenomenon that a pulling or twisting force exerted by other components on the electrode terminals directly acts on the end cover, reducing the risk of connection failure between the end cover and the housing body, and helping to reduce the risk of liquid leakage of the battery cell during use. On the other hand, this can alleviate the phenomenon that the stress generated by the connection between the end cover and the housing body acts on the pressure relief mechanism, alleviating the phenomenon that the pressure relief mechanism is damaged or actuated to open the valve in advance, and further helping to prolong the service life and improve the usage reliability of the battery cell.

According to a second aspect, an embodiment of this application further provides an electric apparatus, including the foregoing battery, where the battery is configured to supply electrical energy.

### BRIEF DESCRIPTION OF DRAWINGS

To describe the technical solutions of the embodiments of this application more clearly, the following briefly describes the accompanying drawings required for describing the embodiments. It is appreciated that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is a structural exploded view of a battery according to some embodiments of this application;
FIG. 3 is a schematic structural diagram of a battery (with a bottom plate removed) according to some embodiments of this application;
FIG. 4 is a cross-sectional view of a battery according to some embodiments of this application;
FIG. 5 is a locally enlarged view of position A of the battery shown in FIG. 4;
FIG. 6 is a schematic structural diagram of a battery cell according to some embodiments of this application;
FIG. 7 is a structural exploded view of a battery cell according to some embodiments of this application;
FIG. 8 is a schematic structural diagram of a support member of a battery according to some embodiments of this application; and
FIG. 9 is a locally enlarged view of position B of the battery shown in FIG. 4.

Reference signs: 1000. vehicle; 100. battery; 10. box; 11. bottom plate; 12. top plate; 13. frame body; 20. battery cell group; 21. battery cell; 211. housing; 2111. wall portion; 2112. housing body; 2112a. opening; 2113. end cover; 212. electrode terminal; 213. pressure relief mechanism; 214. electrode assembly; 2141. tab; 215. current collecting member; 30. support member; 31. first surface; 32. cavity; 33. assembly hole; 40. busbar; 50. electrode output terminal block; 60. buffer member; 200. controller; 300. motor; X. thickness direction of bottom plate; Y. first direction; and Z. second direction.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements. Persons of ordinary skills in the art can understand specific meanings of these terms in this application as appropriate to specific situations.

The term "and/or" in this application is only an associative relationship for describing associated objects, indicating that three relationships may be present. For example, A and/or B may indicate the following three cases: presence of only A; presence of both A and B; and presence of only B. In addition, the character "/" in this application generally indicates an "or" relationship between contextually associated objects.

In the embodiments of this application, like reference signs denote like components, and for brevity, in different embodiments, detailed descriptions of like components are not repeated. It should be understood that, as shown in the accompanying drawings, sizes such as thickness, length, and width of various components and sizes such as thickness, length, and width of integrated devices in the embodiments of this application are merely for illustrative purposes and should not constitute any limitations on this application.

In this application, "a plurality of" means more than two (inclusive).

In the embodiments of this application, a battery cell may be a secondary battery. A secondary battery refers to a battery cell that can continue to be used after discharged because its active materials can be reactivated through recharging.

The battery cell may be a lithium-ion battery, a sodium-ion battery, a sodium-lithium-ion battery, a lithium metal battery, a sodium metal battery, a lithium-sulfur battery, a magnesium-ion battery, a nickel-metal hydride battery, a nickel-cadmium battery, a lead-acid battery, or the like. This is not limited in the embodiments of this application.

A battery cell generally includes an electrode assembly. The electrode assembly includes a positive electrode, a negative electrode, and a separator. During charging and discharging of the battery cell, active ions (for example, lithium ions) are intercalated and deintercalated back and forth between the positive electrode and the negative electrode. The separator is sandwiched between the positive electrode and the negative electrode to prevent short circuits between the positive and negative electrodes and allow active ions to pass through.

In some embodiments, the positive electrode may be a positive electrode plate, and the positive electrode plate may include a positive electrode current collector and a positive electrode active material disposed on at least one surface of the positive electrode current collector.

In an example, the positive electrode current collector has two opposite surfaces in a thickness direction thereof, and the positive electrode active material is disposed on either or both of the two opposite surfaces of the positive electrode current collector.

In an example, the positive electrode current collector may be a metal foil or a composite current collector. For example, for the metal foil, aluminum with silver-plated surface treatment, stainless steel with silver-plated surface treatment, stainless steel, copper, aluminum, nickel, carbon electrode, carbon, titanium, or the like may be used. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compound thereof. However, this application is not limited to such materials, and may alternatively use other conventional well-known materials that can be used as positive electrode active materials for batteries. One type of these positive electrode active materials may be used alone, or two or more of them may be used in combination. Examples of the lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon. Examples of the lithium transition metal oxide may include but are not limited to at least one of lithium cobalt oxide (for example, LiCoO₂), lithium nickel oxide (for example, LiNiO₂), lithium manganese oxide (for example, LiMnO₂ or LiMn₂O₄), lithium nickel cobalt oxide, lithium manganese cobalt oxide, lithium nickel manganese oxide, lithium nickel cobalt manganese oxide (for example, LiNi_{1/3}Co_{1/3}Mn_{1/3}O₂ (NCM333 for short), LiNi_{0.5}Co_{0.2}Mn_{0.3}O₂ (NCM523 for short), LiNi_{0.5}Co_{0.25}Mn_{0.25}O₂ (NCM211 for short), LiNi_{0.6}Co_{0.2}Mn_{0.2}O₂ (NCM622 for short), LiNi_{0.8}Co_{0.1}Mn_{0.1}O₂ (NCM811 for short), lithium nickel cobalt aluminum oxide (for example, LiNi_{0.85}Co_{0.15}Al_{0.05}O₂), and modified compounds thereof.

In some embodiments, a foam metal may be used as the positive electrode. The foam metal may be foam nickel, foam copper, foam aluminum, foam alloy, or the like. When a foam metal is used as the positive electrode, a surface of the foam metal may not be provided with the positive electrode active material, or certainly may be provided with the positive electrode active material. In an example, a lithium source material, potassium metal, or sodium metal may be further filled or/and deposited in the foam metal, and the lithium source material is lithium metal and/or a lithium-rich material.

In some embodiments, the negative electrode may be a negative electrode plate, and the negative electrode plate may include a negative electrode current collector.

In an example, the negative electrode current collector may be a metal foil, foam metal, or composite current collector. For example, for the metal foil, aluminum or stainless steel with silver-plated surface treatment, stainless steel, copper, aluminum, nickel, a carbon electrode, nickel, titanium, or the like may be used. The foam metal may be foam nickel, foam copper, foam aluminum, foam alloy, or the like. The composite current collector may include a polymer material matrix and a metal layer. The composite current collector may be formed by forming a metal material (copper, copper alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the negative electrode plate may include a negative electrode current collector and a negative electrode active material disposed on at least one surface of the negative electrode current collector.

In an example, the negative electrode current collector has two opposite surfaces in a thickness direction thereof, and the negative electrode active material is disposed on either or both of the two opposite surfaces of the negative electrode current collector.

In an example, the negative electrode active material may be a well-known negative electrode active material used for battery cells in the art. For example, the negative electrode active material may include at least one of the following materials: artificial graphite, natural graphite, soft carbon, hard carbon, a silicon-based material, a tin-based material, and lithium titanate. The silicon-based material may be at least one selected from elemental silicon, silicon-oxygen compound, silicon-carbon composite, silicon-nitrogen composite, and silicon alloy. The tin-based material may be at least one selected from elemental tin, tin-oxygen compound, and tin alloy. However, this application is not limited to these materials, but may use other conventional materials that can be used as negative electrode active materials for batteries instead. One type of these negative electrode active materials may be used alone, or two or more types may be used in combination.

In some embodiments, the positive electrode current collector may be made of aluminum, and the negative electrode current collector may be made of copper.

In some embodiments, the electrode assembly further includes a separator, and the separator is disposed between the positive electrode and the negative electrode.

In some embodiments, the separator is a separation film. There may be various types of separation films, and any well-known porous separation film with good chemical stability and mechanical stability can be selected.

In an example, a material of the separation film may include at least one of glass fiber, non-woven fabric, polyethylene, polypropylene, and polyvinylidene fluoride. The separation film may be a single-layer thin film or a multi-layer composite thin film. When the separation film is a multi-layer composite thin film, all layers may be made of the same or different materials. The separator may be a separate component located between the positive and negative electrodes, or may be attached to surfaces of the positive and negative electrodes.

In some embodiments, the separator is a solid electrolyte. The solid electrolyte is disposed between the positive electrode and the negative electrode, and both transmits ions and isolates the positive and negative electrodes.

In some embodiments, the battery cell further includes an electrolyte, and the electrolyte conducts ions between the positive and negative electrodes. The electrolyte may be in a liquid, gel, or solid state. The liquid electrolyte includes an electrolytic salt and a solvent.

In some embodiments, the electrolytic salt may include at least one of lithium hexafluorophosphate, lithium tetrafluoroborate, lithium perchlorate, lithium hexafluoroarsenate, lithium bis(fluorosulfonyl)imide, lithium bis(trifluoromethanesulfonyl)imide, lithium trifluoromethanesulfonate, lithium difluorophosphate, lithium difluoro(oxalato)borate, lithium bis(oxalate)borate, lithium difluorobis(oxalate)phosphate, and lithium tetrafluoro(oxalate)phosphate.

In some embodiments, the solvent may include at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone. The solvent may also be an ether solvent. The ether solvent may include one or more of ethylene glycol dimethyl ether, ethylene glycol diethyl ether, diethylene glycol dimethyl ether, triethylene glycol dimethyl ether, tetraethylene glycol dimethyl ether, 1,3-dioxolane, tetrahydrofuran, methyltetrahydrofuran, diphenyl ether, and crown ether.

The gel electrolyte includes a polymer as a skeleton network of the electrolyte, combined with an ionic liquid-lithium salt.

The solid electrolyte includes a polymer solid electrolyte, an inorganic solid electrolyte, and a composite solid electrolyte.

In an example, the polymer solid electrolyte may be polyether (polyethylene oxide), polysiloxane, polycarbonate, polyacrylonitrile, polyvinylidene fluoride, polymethyl methacrylate, single-ion polymer, poly(ionic liquid)-lithium salt, cellulose, or the like.

In an example, the inorganic solid electrolyte may include one or more of an oxide solid electrolyte (crystalline perovskite, sodium superionic conductor, garnet, or amorphous LiPON film), a sulfide solid electrolyte (crystalline lithium superionic conductor (lithium germanium phosphorus sulfide or argyrodite), or amorphous sulfide), a halide solid electrolyte, a nitride solid electrolyte, and a hydride solid electrolyte.

In an example, the composite solid electrolyte is formed by adding an inorganic solid electrolyte filler into a polymer solid electrolyte.

In some embodiments, the electrode assembly is a wound structure. The positive electrode plate and the negative electrode plate are wound into a wound structure.

In some embodiments, the electrode assembly is a laminated structure.

In an example, a plurality of positive electrode plates and a plurality of negative electrode plates may be provided respectively, and the plurality of positive electrode plates and the plurality of negative electrode plates are alternately stacked.

In an example, a plurality of positive electrode plates may be provided, and the negative electrode plate is folded to form a plurality of stacked folding segments, with one positive electrode plate sandwiched between adjacent folding segments.

In an example, both the positive electrode plate and the negative electrode plate are folded to form a plurality of stacked folding segments.

In an example, a plurality of separators may be provided and disposed between any adjacent positive electrode plates or negative electrode plates respectively.

In an example, the separator may be provided continuously and disposed between any adjacent positive electrode plates or negative electrode plates by folding or winding.

In some embodiments, a shape of the electrode assembly may be cylindrical, flat, multi-prismatic, or the like.

In some embodiments, the electrode assembly is provided with tabs, and the tabs can lead current out of the electrode assembly. The tabs include a positive tab and a negative tab.

In some embodiments, the battery cell may include a housing. The housing is configured to package components like the electrode assembly and electrolyte. The housing may be a steel, aluminum, plastic (such as polypropylene), or composite metal (such as copper-aluminum composite housing) shell, an aluminum-plastic film, or the like.

In an example, the battery cell may be a cylindrical battery cell, prismatic battery cell, pouch battery cell, or battery cell of another shape. Prismatic battery cells include but are not limited to square battery cells, blade battery cells, and multi-prismatic battery cells, and multi-prismatic battery cells are for example hexagonal battery cells.

The battery mentioned in the embodiments of this application is a single physical module that includes one or more battery cells for providing higher voltage and capacity.

In some embodiments, the battery may be a battery module. When a plurality of battery cells are provided, the plurality of battery cells are arranged and fixed to form one battery module.

In some embodiments, the battery may be a battery pack. The battery pack includes a box and battery cells, with the battery cells or battery modules accommodated within the box.

In some embodiments, the box may be used as part of a chassis structure of a vehicle. For example, part of the box may be at least part of a floor of the vehicle. Alternatively, part of the box may be at least part of the vehicle's cross members and roof rails.

In some embodiments, the battery may be an energy storage apparatus. Energy storage apparatuses include energy storage containers, energy storage cabinets, and the like.

With outstanding advantages such as high energy density, low environmental pollution, high power density, long service life, wide adaptation range, and small self-discharge coefficient, batteries are an important part of the current development of new energy. For the development of battery technologies, many design factors need to be considered, for example, performance parameters such as energy density, cycle life, discharge capacity, and charge and discharge rate, as well as safety of the battery.

For a general battery, the battery usually includes a box and a plurality of battery cells accommodated in the box. The battery cell includes a housing and electrode terminals disposed on the housing. The electrode terminals of the plurality of battery cells are connected through a busbar to realize series or parallel connection between the plurality of battery cells in the battery. The housing of the battery cell is further provided with a pressure relief mechanism. The pressure relief mechanism is configured to relieve an internal pressure of the battery cell to reduce the risk of explosion of the battery cell caused by thermal runaway. However, due to the complex operating conditions of the battery, it is often subjected to impact from an external environment, so the box, when deformed by an external impact, is extremely easy to squeeze, bump, or directly transmit an impact force to the battery cell, and also extremely easy to cause impact and bumping to the pressure relief mechanism on the housing of the battery cell and the protruding electrode terminals, especially in a structure in which the battery cell is placed upside down in the box, that is, the electrode terminals and pressure relief mechanism of the battery cell are both located at the bottom of the battery cell. In this case, when the bottom of the battery is impacted or a bottom ball impact test is performed, it is extremely easy to cause damage to the electrode terminals and pressure relief mechanism of the battery cell, resulting in risks such as damage or leakage of the battery cell, and even risks such as fire and explosion during use, which is not conducive to prolonging the service life and improving the usage reliability of the battery.

In view of the above considerations, to solve the problems of short service life and low usage reliability of the battery, an embodiment of this application provides a battery. The battery includes a box, a battery cell group, and a support member. The box includes a bottom plate. The battery cell group is accommodated in the box. The battery cell group includes at least one battery cell. The battery cell includes a housing, electrode terminals, and a pressure relief mechanism. The housing has a wall portion. In a thickness direction of the bottom plate, the wall portion is disposed facing the bottom plate. Both the electrode terminals and the pressure relief mechanism are disposed on the housing, and at least one of the electrode terminals and the pressure relief mechanism is disposed on the wall portion. The support member is disposed between the wall portion and the bottom plate and connected to the wall portion. In the thickness direction of the bottom plate, the support member has a first surface facing away from the wall portion, and the first surface is closer to the bottom plate than the electrode terminals and the pressure relief mechanism.

In the battery with such structure, the box has a bottom plate located at the bottom of the battery cell, the wall portion of the housing is disposed facing the bottom plate, and at least one of the electrode terminals and the pressure relief mechanism of the battery cell is disposed on the wall portion, so that at least one of the electrode terminals and the pressure relief mechanism is disposed on a side of the housing facing the bottom plate. The support member is disposed between the bottom plate of the box and the wall portion of the housing, the support member is connected to the wall portion, and the first surface of the support member facing away from the wall portion is closer to the bottom plate than the electrode terminal and the pressure relief mechanism. In the battery with such structure, on one hand, the support member can support the bottom plate of the box to some extent when the battery is subjected to bottom impact during a bottom ball impact test or during use, which improves the deformation resistance of the bottom plate when subjected to external impact, thereby helping to alleviate the phenomenon that the bottom plate impacts or strikes the battery cell due to deformation. On the other hand, when the bottom plate of the box is impacted or deformed, an impact force received by the bottom plate can preferentially come into contact with the support member, and the impact force received by the bottom plate can be dispersed through the support member, increasing a force-bearing area, so as to alleviate the phenomenon that the impact force received by the bottom plate is concentrated on the battery cell, thereby reducing the situation of local force concentration on the battery cell, improving the protection effect on the electrode terminals or pressure relief mechanism of the battery cell, and thus effectively reducing the risk of the electrode terminals or pressure relief mechanism of the battery cell being damaged by impact. This can also reduce the risk of leakage, fire, or explosion of the battery cell, which helps to prolong the service life and improve the usage reliability of the battery.

The battery disclosed in the embodiments of this application may be used without limitation in an electric apparatus such as a vehicle, a ship or an aircraft. A power supply system of the electric apparatus may include the battery disclosed in this application, which helps to alleviate the problem of damage to the battery cell of the battery due to impact during use, thereby prolonging the service life and improving the usage reliability of the battery.

An embodiment of this application provides an electric apparatus that uses a battery as a power source. The electric apparatus may be but is not limited to a mobile phone, a tablet, a laptop computer, an electric toy, an electric tool, an electric bicycle, an electric car, a ship, or a spacecraft. The electric toy may include a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric apparatus of an embodiment of this application being a vehicle is used as an example for description of the following embodiments.

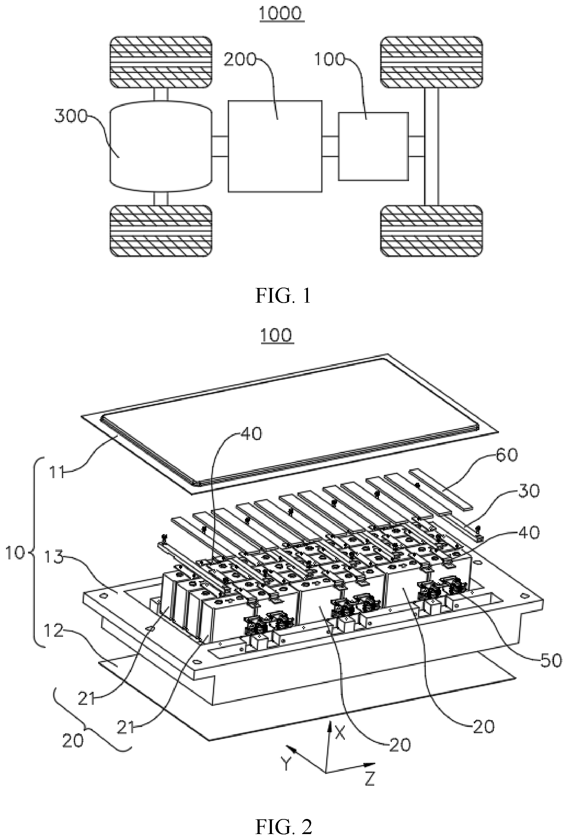

Referring to FIG. 1, FIG. 1 is a schematic structural diagram of a vehicle 1000 according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom of the vehicle 1000, front of the vehicle 1000, or rear of the vehicle 1000. The battery 100 may be configured to supply power to the vehicle 1000. For example, the battery 100 may be used as an operational power source, a usage power source, or the like for the vehicle 1000. The vehicle 1000 may further include a controller 200 and a motor 300. The controller 200 is configured to control the battery 100 to supply power to the motor 300, for example, satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

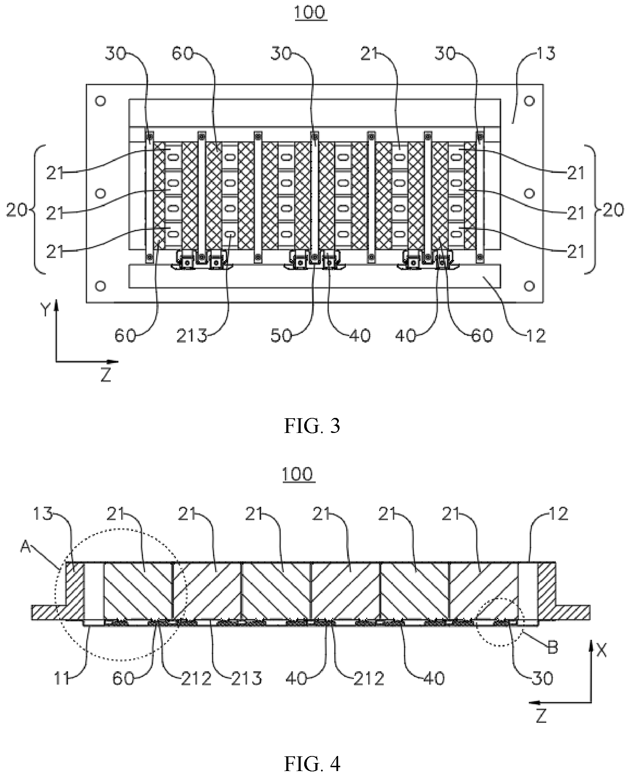

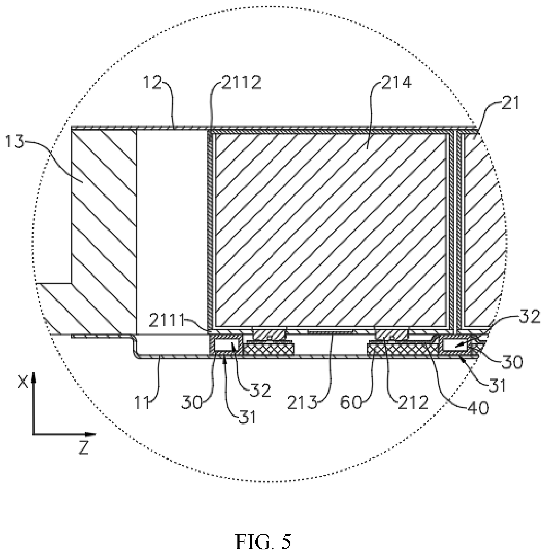

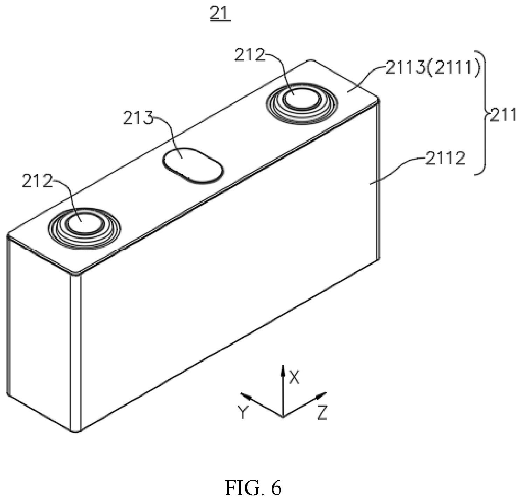

According to some embodiments of this application, refer to FIGs. 2, 3, 4, and 5. FIG. 2 is a structural exploded view of a battery 100 according to some embodiments of this application. FIG. 3 is a schematic structural diagram of a battery 100 (with a bottom plate 11 removed) according to some embodiments of this application. FIG. 4 is a cross-sectional view of a battery 100 according to some embodiments of this application. FIG. 5 is a locally enlarged view of position A of the battery 100 shown in FIG. 4. FIG. 6 is a schematic structural diagram of a battery cell 21 according to some embodiments of this application. This application provides a battery 100. The battery 100 includes a box 10, a battery cell group 20, and a support member 30. The box 10 includes a bottom plate 11. The battery cell group 20 is accommodated in the box 10. The battery cell group 20 includes at least one battery cell 21. The battery cell 21 includes a housing 211, electrode terminals 212, and a pressure relief mechanism 213. The housing 211 has a wall portion 2111. In a thickness direction X of the bottom plate, the wall portion 2111 is disposed facing the bottom plate 11. Both the electrode terminals 212 and the pressure relief mechanism 213 are disposed on the housing 211, and at least one of the electrode terminals 212 and the pressure relief mechanism 213 is disposed on the wall portion 2111. The support member 30 is disposed between the wall portion 2111 and the bottom plate 11 and connected to the wall portion 2111. In the thickness direction X of the bottom plate, the support member 30 has a first surface 31 facing away from the wall portion 2111, and the first surface 31 is closer to the bottom plate 11 than the electrode terminals 212 and the pressure relief mechanism 213.

The box 10 is configured to provide an assembly space for the battery cell 21. The box 10 may adopt various structures. In FIG. 2, the box 10 includes a bottom plate 11, a top plate 12, and a frame body 13. The frame body 13 is a hollow structure with both ends open in the thickness direction X of the bottom plate, that is, the frame body 13 is an annular structure surrounding an outer side of the battery cell group 20. The bottom plate 11 and the top plate 12 are opposite each other in the thickness direction X of the bottom plate, and the bottom plate 11 and the top plate 12 are respectively connected to two sides of the frame body 13 in the thickness direction X of the bottom plate, so that the bottom plate 11, the top plate 12, and the frame body 13 jointly define an assembly space for accommodating the battery cell 21.

In the thickness direction X of the bottom plate, the bottom plate 11 can support the battery cell group 20 or other components in the battery 100. In other words, the thickness direction X of the bottom plate is the direction of gravity or approximately the direction of gravity, and the bottom plate 11 is located at the bottom of the battery cell 21 in the thickness direction X of the bottom plate. Correspondingly, the top plate 12 is located at the top of the battery cell 21.

For example, the bottom plate 11, the top plate 12, and the frame body 13 are separately disposed and connected structures, so as to facilitate assembly of components such as the battery cell 21 into the box 10.

Optionally, the bottom plate 11 may be connected to a side of the frame body 13 in the thickness direction X of the bottom plate by adhesive, welding connection, bolt screwing, or the like. Similarly, the top plate 12 may alternatively be connected to a side of the frame body 13 farther away from the bottom plate 11 in the thickness direction X of the bottom plate by adhesive, welding connection, bolt screwing, or the like.

It should be noted that in some embodiments, the box 10 may alternatively have various structures. For example, the bottom plate 11 and the frame body 13 may be an integrally formed structure, and correspondingly, the top plate 12 and the frame body 13 are separately disposed structures. Certainly, the top plate 12 and the frame body 13 may alternatively be an integrally formed structure, and correspondingly, the bottom plate 11 and the frame body 13 are separately disposed structures.

Certainly, the box 10 may also have various shapes, such as a cylinder, a cuboid, and a cube. For example, in FIGs. 2 and 3, the box 10 has a shape of a cuboid. A height direction of the box 10 is the thickness direction X of the bottom plate, a width direction of the box 10 is a first direction Y, and a length direction of the box 10 is a second direction Z. The thickness direction X of the bottom plate, the first direction Y, and the second direction Z are perpendicular to each other.

Optionally, in the battery 100, one or more battery cell groups 20 may be accommodated in the box 10. When a plurality of battery cell groups 20 are provided in the box 10, the plurality of battery cell groups 20 may be connected in series, parallel, or series-parallel, where being connected in series-parallel means a combination of series and parallel connections of the plurality of battery cell groups 20.

For example, in FIGs. 2 and 3, the battery 100 may include a plurality of battery cell groups 20, and the plurality of battery cell groups 20 are arranged in the second direction Z.

Similarly, the battery cell group 20 includes at least one battery cell 21. In other words, the number of battery cells 21 in each battery cell group 20 may be one or more. When the battery cell group 20 includes a plurality of battery cells 21, the plurality of battery cells 21 may be connected in series, parallel, or series-parallel.

For example, in FIGs. 2 and 3, the battery 100 includes a plurality of battery cell groups 20 arranged in the second direction Z, and each battery cell group 20 includes a plurality of battery cells 21 stacked in the first direction Y, so that the plurality of battery cells 21 are assembled in the box 10 in an array structure. For example, the first direction Y is a thickness direction of the battery cells 21, so that the plurality of battery cells 21 in the battery cell group 20 are stacked in the thickness direction of the battery cells 21.

In some embodiments, referring to FIGs. 2 and 3, the battery 100 may further include busbars 40. The busbars 40 are configured to electrically connect a plurality of battery cells 21 in the battery cell group 20 to realize series or parallel connection between the plurality of battery cells 21 in the battery cell group 20. The busbars 40 are further configured to electrically connect two adjacent battery cell groups 20 to realize series or parallel connection between the two adjacent battery cell groups 20. The busbars 40 are connected to the electrode terminals 212 of the battery cells 21.

In some embodiments, referring to FIGs. 2 and 3, the battery 100 may further include an electrode output terminal block 50. The electrode output terminal block 50 is mounted in the box 10. The electrode output terminal block 50 is connected to the busbars 40 to output or input electrical energy of the battery 100.

Optionally, each battery cell 21 may be a secondary battery or a primary battery; or may be a lithium-sulfur battery, a sodium-ion battery, or a magnesium-ion battery, without being limited thereto. The battery cell 21 may be cuboid, cylindrical, prismatic, or of other shapes. For example, in FIG. 6, the battery cell 21 has a cuboid structure. Correspondingly, the thickness direction X of the bottom plate is also the height direction of the battery cell 21, the first direction Y is also the thickness direction of the battery cell 21, and the second direction Z is also the length direction of the battery cell 21.

In the embodiments of this application, the housing 211 may be further configured to accommodate an electrolyte, for example, a liquid electrolyte. The housing 211 may have various structural forms. The housing 211 may also be made of various materials, such as copper, iron, aluminum, steel, and aluminum alloy.

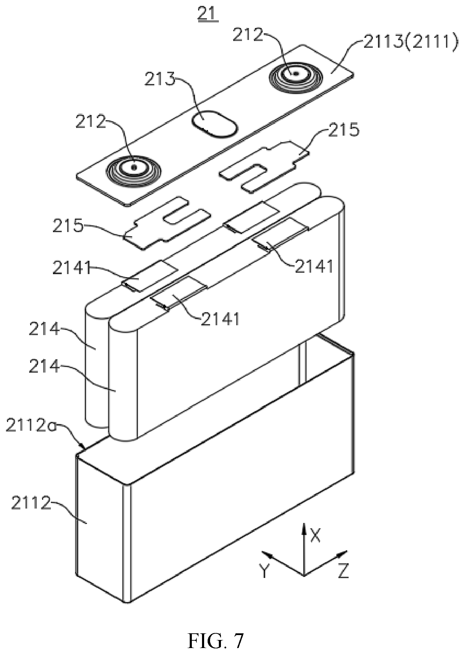

Referring to FIG. 6 and further referring to FIG. 7, FIG. 7 is a structural exploded view of a battery cell 21 according to some embodiments of this application. The battery cell 21 further includes an electrode assembly 214. The electrode assembly 214 is accommodated in the housing 211, and the electrode assembly 214 is electrically connected to the electrode terminals 212 to realize input or output of electrical energy of the battery cell 21. The housing 211 may include a housing body 2112 and an end cover 2113. An accommodating cavity is formed inside the housing body 2112, and an opening 2112a is formed at an end of the accommodating cavity, that is, the housing body 2112 is a hollow structure with one end open. The end cover 2113 covers the opening 2112a of the housing body 2112 and forms a sealed connection to form a sealed space for accommodating the electrode assembly 214 and the electrolyte.

Optionally, the wall portion 2111 where the electrode terminals 212 or the pressure relief mechanism 213 is disposed may be the end cover 2113 or one of the multiple walls of the housing body 2112. For example, referring to FIGs. 6 and 7, the wall portion 2111 may alternatively be the end cover 2113 of the housing 211. Correspondingly, the opening 2112a is located at an end of the housing body 2112 facing the bottom plate 11 of the box 10 in the thickness direction X of the bottom plate, so that the thickness direction X of the bottom plate is a thickness direction of the wall portion 2111 and also a thickness direction of the end cover 2113. Certainly, in other embodiments, the wall portion 2111 may alternatively be a bottom wall of the housing body 2112 opposite the end cover 2113 in the thickness direction X of the bottom plate. Correspondingly, the thickness direction X of the bottom plate is then an arrangement direction of the end cover 2113 and the wall portion 2111. Similarly, the wall portion 2111 may alternatively be a side wall of the housing body 2112 adjacent to and abutting against the end cover 2113.

In the thickness direction X of the bottom plate, the wall portion 2111 is disposed facing the bottom plate 11, that is, a wall at an end of the housing 211 of the battery cell 21 facing the bottom plate 11 in the thickness direction X of the bottom plate is the wall portion 2111.

During assembling of the battery cell 21, the electrode assembly 214 may be first placed into the housing body 2112, the electrolyte is filled into the housing body 2112, and then the end cover 2113 covers the opening 2112a of the housing body 2112 to close the opening 2112a of the housing body 2112.

The housing body 2112 may have various shapes, such as a cylinder and a cuboid. The shape of the housing body 2112 may be determined according to a specific shape of the electrode assembly 214. For example, if the electrode assembly 214 is a cylindrical structure, the housing body 2112 may be a cylindrical structure; or if the electrode assembly 214 is a cuboid structure, the housing body 2112 may be a cuboid structure. Certainly, the end cover 2113 may also have various structures, for example, the end cover 2113 is a plate structure, a hollow structure with one end open, or the like. For example, in FIGs. 6 and 7, the housing body 2112 is a cuboid structure.

It can be understood that the housing 211 is not limited to the foregoing structures. The housing 211 may alternatively have other structures. For example, the housing 211 includes a housing body 2112 and two end covers 2113. The housing body 2112 is a hollow structure with openings 2112a on opposite sides. One end cover 2113 correspondingly covers one opening 2112a of the housing body 2112 and forms a sealed connection to form a sealed space for accommodating the electrode assembly 214 and the electrolyte.

The electrode assembly 214 is a component in the battery cell 21 in which electrochemical reactions occur. The electrode assembly 214 may have various structures. For example, the electrode assembly 214 may be a wound structure formed by winding a positive electrode plate, a separator, and a negative electrode plate, or a laminated structure formed by stacking a positive electrode plate, a separator, and a negative electrode plate.

For example, the separator is a separation film, and a main material of the separation film may be at least one selected from glass fiber, non-woven fabric, polyethylene, polypropylene, and polyvinylidene fluoride.

A tab 2141 is formed at an end of the electrode assembly 214. The tab 2141 is configured to perform input or output for the positive or negative electrode of the electrode assembly 214. The tab 2141 is configured to be connected to the electrode terminal 212 to realize electrical connection between the electrode assembly 214 and the electrode terminal 212. It should be noted that the tab 2141 of the electrode assembly 214 is a component formed by stacking and connecting regions on the positive electrode plate that are not coated with a positive electrode active substance layer or a component formed by stacking and connecting regions on the negative electrode plate that are not coated with a negative electrode active substance layer. If the tab 2141 is configured to perform output for the positive electrode of the electrode assembly 214, the tab 2141 is a component formed by stacking and connecting regions on the positive electrode plate that are not coated with the positive electrode active substance layer; or if the tab 2141 is configured to perform output for the negative electrode of the electrode assembly 214, the tab 2141 is a component formed by stacking and connecting regions on the negative electrode plate that are not coated with the negative electrode active substance layer.

Optionally, the number of electrode assemblies 214 accommodated in the housing 211 may be one or more. For example, in FIG. 7, the housing 211 of the battery cell 21 is provided with two electrode assemblies 214, and the two electrode assemblies 214 are stacked in the first direction Y, that is, the two electrode assemblies 214 are stacked in the thickness direction of the battery cell 21. Certainly, in other embodiments, the number of electrode assemblies 214 accommodated in the housing 211 may be one, three, four, five, six, seven, eight, or the like.

In the embodiments of this application, the electrode terminals 212 output or input electrical energy of the battery cell 21. The electrode terminals 212 are insulated and mounted on the housing 211 and exceed an outer surface of the housing 211, that is, no electrical connection is formed between the electrode terminals 212 and the housing 211.

For example, in FIGs. 5 and 6, the electrode terminals 212 are insulated and mounted on the wall portion 2111 and exceed a side of the wall portion 2111 facing the bottom plate 11 in the thickness direction X of the bottom plate, that is, no electrical connection is formed between the electrode terminals 212 and the wall portion 2111, and the electrode terminals 212 exceed a surface on the side of the wall portion 2111 facing the bottom plate 11 along a direction approaching the bottom plate 11 in the thickness direction X of the bottom plate. Similarly, the electrode terminal 212 may also be made of various materials, for example, the electrode terminal 212 may be made of copper, iron, aluminum, steel, aluminum alloy, or the like.

Optionally, the electrode terminals 212 may be directly connected to the tabs 2141 of the electrode assembly 214, such as by welding or abutment, or may be indirectly connected to the tabs 2141 of the electrode assembly 214 through other components.

In some embodiments, referring to FIG. 7, the battery cell 21 may further include current collecting members 215. The current collecting members 215 are disposed in the housing 211. The current collecting members 215 connect the electrode terminals 212 and the tabs 2141 of the electrode assembly 214 to realize electrical connection between the electrode assembly 214 and the electrode terminals 212.

For example, the current collecting members 215 are connected to the electrode terminals 212 by welding, and the current collecting members 215 are connected to the tabs 2141 of the electrode assembly 214. Certainly, in other embodiments, the current collecting members 215 may alternatively be in a structure of abutting against the electrode terminals 212, and similarly, the current collecting members 215 may alternatively be in a structure of abutting against the tabs 2141 of the electrode assembly 214.

In FIGs. 6 and 7, the battery cell 21 includes two electrode terminals 212 and two current collecting members 215. The two electrode terminals 212 are spaced apart from each other on the wall portion 2111 in the second direction Z, and the two current collecting members 215 are spaced apart from each other in the housing 211 in the second direction Z. Correspondingly, each electrode assembly 214 has two tabs 2141. The two tabs 2141 are spaced apart from each other in the second direction Z, and the two tabs 2141 have opposite polarities. The two electrode terminals 212 are electrically connected to the two tabs 2141 of the electrode assembly 214 through the two current collecting members 215 respectively to realize input or output for the positive and negative electrodes of the battery cell 21. In other words, the two electrode terminals 212 are respectively configured to perform output or input for the positive and negative electrodes of the battery cell 21. Correspondingly, the two tabs 2141 are respectively the positive tab and negative tab of the electrode assembly 214.

In the embodiments of this application, the pressure relief mechanism 213 relieves a pressure inside the battery cell 21 when an internal pressure or temperature of the battery cell 21 reaches a predetermined value.

At least one of the electrode terminals 212 and the pressure relief mechanism 213 is disposed on the wall portion 2111, that is, only one of the electrode terminals 212 and the pressure relief mechanism 213 may be disposed on the wall portion 2111, or both may be disposed on the wall portion 2111. For example, in FIGs. 5 and 6, the pressure relief mechanism 213 is also disposed on the wall portion 2111. In other words, both the electrode terminals 212 and the pressure relief mechanism 213 are disposed on the wall portion 2111. In FIG. 7, the wall portion 2111 is the end cover 2113. Correspondingly, both the electrode terminals 212 and the pressure relief mechanism 213 are disposed on the end cover 2113 of the housing 211.

It should be noted that in other embodiments, it is also possible that only the electrode terminals 212 are disposed on the wall portion 2111, while the pressure relief mechanism 213 is disposed on another wall of the housing 211. Certainly, it is also possible that only the pressure relief mechanism 213 is disposed on the wall portion 2111, while the electrode terminals 212 are disposed on another wall of the housing 211.

Optionally, the pressure relief mechanism 213 and the housing 211 may be an integrally formed structure or separately disposed structures. If the pressure relief mechanism 213 and the housing 211 are separate structures, the pressure relief mechanism 213 may be connected to the housing 211 by welding or other means. Correspondingly, the pressure relief mechanism 213 may be a pressure relief component such as an explosion-proof valve, an explosion-proof sheet, an air valve, a pressure relief valve, or a safety valve. If the pressure relief mechanism 213 and the housing 211 are an integrally formed structure, the pressure relief mechanism 213 is a region on the housing 211 with a weak structure, for example, a region on the housing 211 provided with an indentation groove.

In the embodiments of this application, the support member 30 is disposed between the bottom plate 11 of the box 10 and the wall portion 2111 of the housing 211 of the battery cell 21 in the thickness direction X of the bottom plate, and the support member 30 is connected to the wall portion 2111 to provide support between the bottom plate 11 of the box 10 and the wall portion 2111 of the housing 211 of the battery cell 21. The support member 30 may be made of various materials. The support member 30 may be made of an insulating material, such as carbon fiber, epoxy resin, polyurethane resin, plastic, or ceramic. Certainly, the support member 30 may alternatively be made of a metal material, such as copper, iron, aluminum, steel, or aluminum alloy. It should be noted that when the support member 30 is made of a metal material, an outer surface of the support member 30 needs to be coated with an insulating film to insulate and isolate the support member 30 from the battery cell 21 and other components such as the box 10.

Optionally, the support member 30 and the wall portion 2111 may have various connection structures therebetween, such as adhesive connection, bolt screwing, or snap connection.

In the thickness direction X of the bottom plate, the support member 30 has a first surface 31 facing away from the wall portion 2111. The first surface 31 is closer to the bottom plate 11 than the electrode terminals 212 and the pressure relief mechanism 213. In other words, in the thickness direction X of the bottom plate, the first surface 31 of the support member 30 is located between the bottom plate 11 and the electrode terminals 212 and between the bottom plate 11 and the pressure relief mechanism 213, so that whether the bottom plate 11 is in contact with or not in contact with the first surface 31 of the support member 30, the electrode terminals 212 and the pressure relief mechanism 213 are spaced apart from the bottom plate 11 in the thickness direction X of the bottom plate, that is, there is a distance between the electrode terminals 212 and pressure relief mechanism 213 and the bottom plate 11 in the thickness direction X of the bottom plate.

It should be noted that when only the electrode terminals 212 are disposed on the wall portion 2111, the first surface 31 is closer to the bottom plate 11 than the electrode terminals 212 in the thickness direction X of the bottom plate. When only the pressure relief mechanism 213 is disposed on the wall portion 2111, the first surface 31 is closer to the bottom plate 11 than the pressure relief mechanism 213 in the thickness direction X of the bottom plate. If both the electrode terminals 212 and the pressure relief mechanism 213 are disposed on the wall portion 2111, the first surface 31 is closer to the bottom plate 11 than the electrode terminals 212 and the pressure relief mechanism 213 in the thickness direction X of the bottom plate.

In these embodiments, the box 10 has a bottom plate 11 located at the bottom of the battery cell 21, the wall portion 2111 of the housing 211 is disposed facing the bottom plate 11, and at least one of the electrode terminals 212 and the pressure relief mechanism 213 of the battery cell 21 is disposed on the wall portion 2111, so that at least one of the electrode terminals 212 and the pressure relief mechanism 213 is disposed on a side of the housing 211 facing the bottom plate 11. The support member 30 is disposed between the bottom plate 11 of the box 10 and the wall portion 2111 of the housing 211, the support member 30 is connected to the wall portion 2111, and the first surface 31 of the support member 30 facing away from the wall portion 2111 is closer to the bottom plate 11 than the electrode terminals 212 and the pressure relief mechanism 213. In the battery 100 with such structure, on one hand, the support member 30 can support the bottom plate 11 of the box 10 to some extent when the battery 100 is subjected to bottom impact during a bottom ball impact test or during use, which improves the deformation resistance of the bottom plate 11 when subjected to external impact, thereby helping to alleviate the phenomenon that the bottom plate 11 impacts or strikes the battery cell 21 due to deformation. On the other hand, when the bottom plate 11 of the box 10 is impacted or deformed, an impact force received by the bottom plate 11 can preferentially come into contact with the support member 30, and the impact force received by the bottom plate 11 can be dispersed through the support member 30, increasing a force-bearing area, so as to alleviate the phenomenon that the impact force received by the bottom plate 11 is concentrated on the battery cell 21, thereby reducing the situation of local force concentration on the battery cell 21, improving the protection effect on the electrode terminals 212 or pressure relief mechanism 213 of the battery cell 21, and thus effectively reducing the risk of the electrode terminals 212 or pressure relief mechanism 213 of the battery cell 21 being damaged by impact. This can also reduce the risk of leakage, fire, or explosion of the battery cell 21, which helps to prolong the service life and improve the usage reliability of the battery 100.

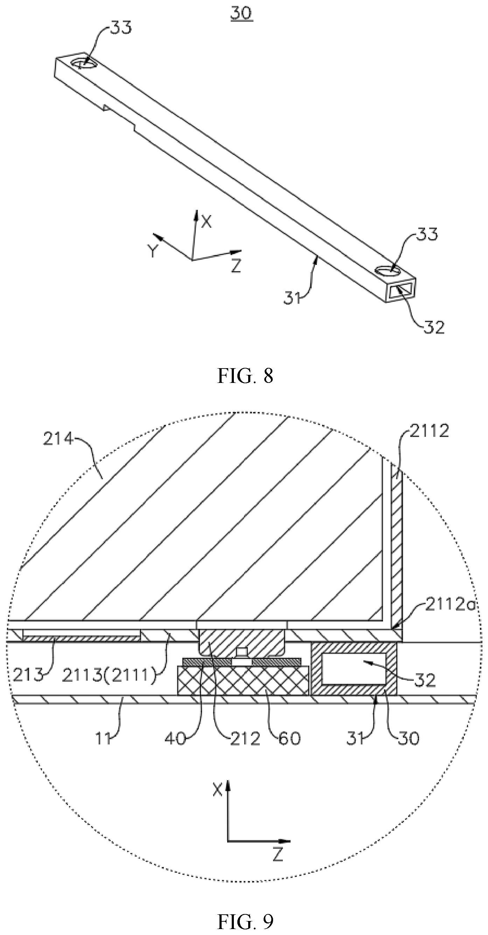

According to some embodiments of this application, referring to FIGs. 4 and 5, and further referring to FIG. 8, FIG. 8 is a schematic structural diagram of the support member 30 of the battery 100 according to some embodiments of this application. In the thickness direction X of the bottom plate, the first surface 31 abuts against the bottom plate 11. In other words, two sides of the support member 30 in the thickness direction X of the bottom plate respectively abut against the bottom plate 11 and the wall portion 2111.

In these embodiments, the first surface 31 abutting against the bottom plate 11 allows the support member 30 to have a structure in which two sides in the thickness direction X of the bottom plate respectively abut against the wall portion 2111 of the housing 211 and the bottom plate 11 of the box 10. The battery 100 with such structure can reduce a gap size between the support member 30 and the bottom plate 11. On one hand, this can improve the internal space utilization of the battery 100, helping to increase the energy density of the battery 100. On the other hand, this can improve the supporting effect on the bottom plate 11 by the support member 30, further improving the deformation resistance of the bottom plate 11 when subjected to external impact, which helps to alleviate the phenomenon that the bottom plate 11 impacts or strikes the battery cell 21 due to deformation.

According to some embodiments of this application, referring to FIGs. 2, 3, and 5, the battery cell group 20 includes a plurality of battery cells 21, the plurality of battery cells 21 are stacked in the first direction Y, and the first direction Y is perpendicular to the thickness direction X of the bottom plate. The support member 30 extends along the first direction Y, and the support member 30 is connected to the wall portions 2111 of the housings 211 of the plurality of battery cells 21 in the battery cell group 20.

The battery cell group 20 includes a plurality of battery cells 21, and the plurality of battery cells 21 are stacked in the first direction Y. In other words, each battery cell group 20 includes a plurality of battery cells 20 arranged in a stack in the first direction Y.

For example, in FIGs. 2 and 3, the battery cell group 20 includes four battery cells 21 stacked in the first direction Y. Certainly, in other embodiments, the battery cell group 20 may alternatively include two, three, five, or six battery cells 21 stacked in the first direction Y.

The support member 30 is connected to the wall portions 2111 of the housings 211 of the plurality of battery cells 21 in the battery cell group 20. In other words, the support member 30 is disposed between the plurality of battery cells 21 in the battery cell group 20 and the bottom plate 11, and the support member 30 is connected to the wall portions 2111 of the housings 211 of the plurality of battery cells 21 in the battery cell group 20, so that the plurality of battery cells 21 in the battery cell group 20 can share one support member 30.

In these embodiments, the battery cell group 20 is provided with a plurality of battery cells 21 stacked in the first direction Y. The support member 30 is arranged as a structure extending along the first direction Y, and the support member 30 is connected to the wall portions 2111 of the plurality of battery cells 21 in the battery cell group 20, so that the support member 30 can support and protect the plurality of battery cells 21 in the battery cell group 20, thus supporting and protecting the plurality of battery cells 21 in the battery cell group 20 using a single support member 30 while increasing the electric capacity of the battery 100 without the need to provide a corresponding support member 30 for each battery cell 21, thereby effectively reducing the manufacturing cost of the battery 100 and helping to reduce the assembly difficulty of the battery 100 to improve the assembly efficiency of the battery 100.

In some embodiments, referring to FIGs. 2, 3, 4, and 5, the battery 100 includes a plurality of battery cell groups 20, the plurality of battery cell groups 20 are disposed in the second direction Z, and the second direction Z is perpendicular to the thickness direction X of the bottom plate and the first direction Y. In the second direction Z, every two adjacent battery cell groups 20 share one support member 30, and the support member 30 is connected to the wall portions 2111 of the housings 211 of the battery cells 21 in the two adjacent battery cell groups 20.

The battery 100 includes a plurality of battery cell groups 20, and the plurality of battery cell groups 20 are arranged in the second direction Z. In other words, a plurality of battery cells 21 arranged in an array are provided in the battery 100.

For example, in FIGs. 2 and 3, the battery 100 includes six battery cell groups 20 arranged in the second direction Z. Certainly, in other embodiments, the battery 100 may alternatively include two, three, four, five, or seven battery cell groups 20 arranged in the second direction Z.

In the second direction Z, every two adjacent battery cell groups 20 share one support member 30, and the support member 30 is connected to the wall portions 2111 of the housings 211 of the battery cells 21 in the two adjacent battery cell groups 20. In other words, in FIG. 5, the support member 30 disposed between two adjacent battery cell groups 20 can support and protect the plurality of battery cells 21 in the two adjacent battery cell groups 20, and the support member 30 is connected to the wall portions 2111 of the housings 211 of the battery cells 21 in the two adjacent battery cell groups 20, that is, the support member 30 located between the two adjacent battery cell groups 20 has one part used to support the plurality of battery cells 21 in one battery cell group 20, and the other part used to support the plurality of battery cells 21 in the other battery cell group 20.

In these embodiments, in the second direction Z, every two adjacent battery cell groups 20 share one support member 30, and the support member 30 is connected to the wall portions 2111 of the plurality of battery cells 21 in the two adjacent battery cell groups 20. In the battery 100 with such structure, on one hand, one support member 30 can support and protect the plurality of battery cells 21 in the two adjacent battery cell groups 20, which helps to reduce the manufacturing cost of the battery 100. On the other hand, this enables the support member 30 to distribute an impact force received by the bottom plate 11 to the plurality of battery cells 21 in the two adjacent battery cell groups 20, thereby further alleviating the phenomenon that the impact force received by the bottom plate 11 is concentrated on the battery cell 21, further reducing the situation of local force concentration on the battery cell 21, thus further improving the protection effect on the electrode terminals 212 or pressure relief mechanism 213 of the battery cell 21, and reducing the risk of the electrode terminals 212 or pressure relief mechanism 213 of the battery cell 21 being damaged by impact.

According to some embodiments of this application, referring to FIGs. 2, 5, and 8, a cavity 32 is formed inside the support member 30. In other words, the support member 30 is a hollow structure.

It should be noted that in other embodiments, a stiffener may be further provided in the cavity 32 of the support member 30, and the stiffener is connected to a cavity wall surface of the cavity 32 to enhance the structural strength of the support member 30.

In these embodiments, a cavity 32 is provided inside the support member 30. On one hand, a weight of the support member 30 can be reduced, which helps to increase the energy density of the battery 100. On the other hand, this enables the support member 30 to have a crash energy absorption capability when subjected to a large impact force, which helps to improve the protection effect on the battery cell 21 by the support member 30.

In some embodiments, referring to FIGs. 2 and 8, a cavity 32 is formed inside the support member 30, and the cavity 32 penetrates both ends of the support member 30 in the first direction Y. In other words, the cavity 32 is a structure extending along the first direction Y, and the cavity 32 penetrates end faces of both ends of the support member 30 in the first direction Y.

Optionally, referring to FIGs. 2 and 8, the support member 30 is further provided with an assembly hole 33. The assembly hole 33 penetrates the support member 30 in the thickness direction X of the bottom plate, and the assembly hole 33 is in communication with the cavity 32. The assembly hole 33 is used for inserting a bolt, so that the support member 30 can also be screwed to the box 10 by a bolt.

For example, the support member 30 is provided with two assembly holes 33. The two assembly holes 33 are respectively located at two ends of the support member 30 in the first direction Y, and the support member 30 is screwed to the frame body 13 of the box 10 by bolts.

In these embodiments, a cavity 32 being provided inside the support member 30 and the cavity 32 penetrating both ends of the support member 30 in the first direction Y can reduce the molding difficulty of the cavity 32 of the support member 30 while achieving weight reduction of the support member 30 and enabling the support member 30 to have a crash energy absorption capability when subjected to a large impact force, which helps to reduce the manufacturing difficulty of the support member 30.

According to some embodiments of this application, the support member 30 is connected to the wall portion 2111 by adhesive.

For example, the support member 30 may be adhered to the wall portion 2111 by glue, double-sided adhesive tape, hot melt adhesive, or the like.

In these embodiments, the support member 30 and the wall portion 2111 of the housing 211 are connected by an adhesive connection structure. On one hand, this facilitates assembly and helps to reduce the connection difficulty between the support member 30 and the wall portion 2111 of the housing 211. On the other hand, this allows the connection and assembly between the support member 30 and the wall portion 2111 of the housing 211 not to affect the battery cell 21, which helps to alleviate the phenomenon that the support member 30 damages the battery cell 21.

According to some embodiments of this application, an elastic modulus of a material of the support member 30 is greater than or equal to 1000 MPa.

For example, the elastic modulus of the material of the support member 30 may be 1000 MPa, 1010 MPa, 1050 MPa, 1100 MPa, 1200 MPa, 1300 MPa, 1500 MPa, 1600 MPa, 1800 MPa, 2000 MPa, 2100 MPa, 2200 MPa, 2500 MPa, 3000 MPa, or the like.

For example, the material of the support member 30 may be carbon fiber, epoxy resin, polyurethane resin, or the like.

In these embodiments, setting the elastic modulus of the material of the support member 30 to be greater than or equal to 1000 MPa allows for sufficient rigidity of the support member 30, so that when the bottom plate 11 is deformed due to impact, the supporting effect of the support member 30 between the bottom plate 11 and the battery cell 21 can be improved, and allows for sufficient deformation resistance of the support member 30, so that the support member 30 can better distribute and disperse a received impact force.

According to some embodiments of this application, the support member 30 is made of an insulating material.

It should be noted that in other embodiments, the support member 30 may alternatively be made of a metal material or the like, for example, copper, iron, aluminum, or aluminum alloy. When the support member 30 is made of a metal material, an outer surface of the support member 30 needs to be coated with an insulating film to insulate and isolate the support member 30 and the housing 211 of the battery cell 21.

In these embodiments, arranging the support member 30 to be made of an insulating material allows the battery cell 21 not to form an electrical circuit connection with the support member 30, thereby reducing the risk of short circuit inside the battery 100, and helping to improve the usage reliability of the battery 100.

According to some embodiments of this application, referring to FIGs. 3, 5, and 6, the pressure relief mechanism 213 is disposed on the wall portion 2111. In a plane perpendicular to the thickness direction X of the bottom plate, an orthographic projection of the pressure relief mechanism 213 does not overlap with an orthographic projection of the support member 30.

The pressure relief mechanism 213 is disposed on the wall portion 2111, that is, the pressure relief mechanism 213 is disposed at the end of the housing 211 of the battery cell 21 facing the bottom plate 11 in the thickness direction X of the bottom plate. In other words, the pressure relief mechanism 213 is disposed facing the bottom plate 11 in the thickness direction X of the bottom plate.

In the plane perpendicular to the thickness direction X of the bottom plate, the orthographic projection of the pressure relief mechanism 213 does not overlap with the orthographic projection of the support member 30. In other words, in the thickness direction X of the bottom plate, the projection of the pressure relief mechanism 213 does not overlap with the projection of the support member 30, and the pressure relief mechanism 213 and the support member 30 do not overlap with each other.

In these embodiments, the pressure relief mechanism 213 and the support member 30 are disposed with their orthographic projections in the plane perpendicular to the thickness direction X of the bottom plate not overlapping, so that the support member 30 does not cover or block the pressure relief mechanism 213 in the thickness direction X of the bottom plate, thereby reducing the blocking and interference of the support member 30 on the pressure relief mechanism 213, and improving the smoothness of the pressure relief mechanism 213 when relieving an internal pressure of the battery cell 21.

According to some embodiments of this application, referring to FIGs. 5 and 6, both the electrode terminals 212 and the pressure relief mechanism 213 are disposed on the wall portion 2111. In other words, both the electrode terminals 212 and the pressure relief mechanism 213 are disposed at the end of the housing 211 of the battery cell 21 facing the bottom plate 11 in the thickness direction X of the bottom plate, that is, both the electrode terminals 212 and the pressure relief mechanism 213 are disposed facing the bottom plate 11 in the thickness direction X of the bottom plate.

In these embodiments, both the electrode terminals 212 and the pressure relief mechanism 213 are disposed on the wall portion 2111, so that both the electrode terminals 212 and the pressure relief mechanism 213 are located at the end of the housing 211 of the battery cell 21 facing the bottom plate 11 in the thickness direction X of the bottom plate, thereby facilitating assembly and manufacturing, and the support member 30 can support and protect both the electrode terminals 212 and the pressure relief mechanism 213.

According to some embodiments of this application, referring to FIGs. 2, 3, and 6, and further referring to FIG. 9, FIG. 9 is a locally enlarged view of position B of the battery 100 shown in FIG. 4. The electrode terminals 212 are disposed on the wall portion 2111. The battery 100 may further include a buffer member 60. In the thickness direction X of the bottom plate, the buffer member 60 is disposed between the electrode terminals 212 and the bottom plate 11, and at least part of the projections of the electrode terminals 212 is located within the buffer member 60.

In the thickness direction X of the bottom plate, the buffer member 60 is disposed between the electrode terminals 212 and the bottom plate 11. In other words, the buffer member 60 is disposed on sides of the electrode terminals 212 facing the bottom plate 11 in the thickness direction X of the bottom plate.

At least part of the projections of the electrode terminals 212 is located within the buffer member 60, that is, the buffer member 60 covers at least part of the electrode terminals 212 in the thickness direction X of the bottom plate.

In these embodiments, the battery 100 is further provided with a buffer member 60. The buffer member 60 is disposed between the electrode terminals 212 and the bottom plate 11 in the thickness direction X of the bottom plate, and the buffer member 60 covers at least part of the electrode terminals 212 in the thickness direction X of the bottom plate. On one hand, the buffer member 60 can absorb an impact force transmitted by the bottom plate 11 when the bottom plate 11 is deformed due to impact, so as to reduce an impact force acting on the electrode terminals 212, thereby providing buffering and protection for the electrode terminals 212, further reducing the risk of the battery cell 21 being damaged by impact, and helping to prolong the service life and improve the usage reliability of the battery 100. On the other hand, the buffer member 60 can further increase the supporting effect on the bottom plate 11 when the bottom plate 11 is deformed due to impact, which further improves the deformation resistance of the bottom plate 11 when subjected to external impact, helping to alleviate the phenomenon that the bottom plate 11 impacts or strikes the battery cell 21 due to deformation.

In some embodiments, referring to FIGs. 3 and 9, in the thickness direction X of the bottom plate, the buffer member 60 covers the electrode terminals 212. In other words, the entire projections of the electrode terminals 212 in the thickness direction X of the bottom plate are located within the buffer member 60.

In these embodiments, the buffer member 60 is arranged to cover the electrode terminals 212 in the thickness direction X of the bottom plate, so that the entire projections of the electrode terminals 212 in the thickness direction X of the bottom plate are located within the buffer member 60, which helps to further improve the buffering and protecting effect on the electrode terminal 212 by the buffer member 60.

According to some embodiments of this application, referring to FIGs. 2 and 9, the battery 100 may further include a busbar 40. The busbar 40 is disposed in the box 10. In the thickness direction X of the bottom plate, the busbar 40 is connected to ends of the electrode terminals 212 facing the bottom plate 11 to be electrically connected to the battery cell 21. In the thickness direction X of the bottom plate, the first surface 31 is closer to the bottom plate 11 than the busbar 40, and the buffer member 60 is disposed between the busbar 40 and the bottom plate 11.

The busbars 40 connect the electrode terminals 212 of the plurality of battery cells 21 in the battery cell group 20 to realize series or parallel connection between the plurality of battery cells 21. For example, in FIG. 2, two electrode terminals 212 with opposite polarities in every two battery cells 21 are connected by one busbar 40 to realize series connection between the plurality of battery cells 21. Correspondingly, an electrode output terminal block 50 for connecting with the busbar 40 is further provided in the box 10 of the battery 100, so that electrical energy of the battery 100 is output or input through the electrode output terminal block 50.

Optionally, the busbar 40 may be made of various materials, such as copper, iron, aluminum, steel, or aluminum alloy.

In the thickness direction X of the bottom plate, the busbar 40 is connected to the ends of the electrode terminals 212 facing the bottom plate 11. In other words, the busbar 40 is located between the electrode terminals 212 and the bottom plate 11 in the thickness direction X of the bottom plate, and the busbar 40 is connected to the electrode terminals 212. For example, the busbar 40 is connected to the electrode terminals 212 by welding.

In the thickness direction X of the bottom plate, the first surface 31 is closer to the bottom plate 11 than the busbar 40. In other words, in the thickness direction X of the bottom plate, the first surface 31 of the support member 30 is located between the bottom plate 11 and the busbar 40, so that whether the bottom plate 11 is in contact with or not in contact with the first surface 31 of the support member 30, the busbar 40 and the bottom plate 11 are spaced apart from each other, that is, there is a distance between the busbar 40 and the bottom plate 11 in the thickness direction X of the bottom plate.

In the thickness direction X of the bottom plate, the buffer member 60 is disposed between the busbar 40 and the bottom plate 11. In other words, the buffer member 60 is disposed on a side of the busbar 40 farther away from the electrode terminals 212 in the thickness direction X of the bottom plate.

It should be noted that in other embodiments, the busbar 40 may alternatively be connected to outer peripheral surfaces of the electrode terminals 212, so that the busbar 40 is not located between the electrode terminals 212 and the bottom plate 11. In such embodiments, the buffer member 60 is a structure directly disposed between the electrode terminals 212 and the bottom plate 11, or the buffer member 60 is directly connected to the ends of the electrode terminals 212 facing the bottom plate 11.

In these embodiments, a busbar 40 is further provided in the box 10 of the battery 100. The busbar 40 is connected to the electrode terminals 212 to realize input or output of electrical energy of the battery cell 21. The busbar 40 is connected to the ends of the electrode terminals 212 facing the bottom plate 11, and the buffer member 60 is disposed between the busbar 40 and the bottom plate 11. On one hand, this facilitates the assembly and connection of the busbar 40 and the electrode terminals 212, helping to reduce the assembly difficulty between the busbar 40 and the electrode terminals 212. On the other hand, the buffer member 60 can also provide buffering and protection for the busbar 40 to some extent. In addition, the first surface 31 arranged to be closer to the bottom plate 11 than the busbar 40 allows the support member 30 to also support and protect the busbar 40 to some extent.

In some embodiments, referring to FIG. 9, in the thickness direction X of the bottom plate, two sides of the buffer member 60 respectively abut against the busbar 40 and the bottom plate 11.

In these embodiments, two sides of the buffer member 60 in the thickness direction X of the bottom plate are arranged to respectively abut against the busbar 40 and the bottom plate 11, so that a gap size between the buffer member 60 and the bottom plate 11 can be reduced. On one hand, this can improve the internal space utilization of the battery 100, which helps to increase the energy density of the battery 100. On the other hand, this can improve the buffering effect of the buffer member 60 on the busbar 40 and the electrode terminal 212, and further improve the supporting effect on the bottom plate 11 by the buffer member 60, thus further improving the deformation resistance of the bottom plate 11 when subjected to external impact, and helping to alleviate the phenomenon that the bottom plate 11 impacts or strikes the battery cell 21 due to deformation.

According to some embodiments of this application, referring to FIGs. 2, 3, and 4, the battery cell group 20 includes a plurality of battery cells 21, the plurality of battery cells 21 are stacked in the first direction Y, the busbar 40 connects the electrode terminals 212 of the plurality of battery cells 21, and the first direction Y is perpendicular to the thickness direction X of the bottom plate. The buffer member 60 extends along the first direction Y. In the thickness direction X of the bottom plate, the buffer member 60 covers the electrode terminals 212 of the plurality of battery cells 21.

In the thickness direction X of the bottom plate, the buffer member 60 covers the electrode terminals 212 of the plurality of battery cells 21. In other words, the buffer member 60 is disposed between the electrode terminals 212 of the plurality of battery cells 21 in the battery cell group 20 and the bottom plate 11, and the buffer member 60 can cover the electrode terminals 212 of the plurality of battery cells 21 in the thickness direction X of the bottom plate, so that the plurality of battery cells 21 in the battery cell group 20 can share one buffer member 60.

In these embodiments, the battery cell group 20 is provided with a plurality of battery cells 21 stacked in the first direction Y, and the busbar 40 connects the electrode terminals 212 of the plurality of battery cells 21 to realize parallel or series connection between the plurality of battery cells 21, featuring a simple structure that is easy to implement. The buffer member 60 is arranged in the structure extending along the first direction Y, and the buffer member 60 covers the electrode terminals 212 of the plurality of battery cells 21 in the thickness direction X of the bottom plate, allowing the buffer member 60 to provide buffering and protection for the electrode terminals 212 of the plurality of battery cells 21 in the battery cell group 20, so that there is no need to provide a corresponding buffer member 60 for the electrode terminals 212 of each battery cell 21, which helps to reduce the manufacturing cost of the battery 100, reduce the assembly difficulty of the battery 100, and improve the assembly efficiency of the battery 100.

In some embodiments, referring to FIGs. 3, 4, 5, and 6, the battery cell 21 includes two electrode terminals 212 with opposite polarities. The two electrode terminals 212 are respectively a first electrode terminal 212 and a second electrode terminal 212. The first electrode terminal 212 and the second electrode terminal 212 are spaced apart from each other on the wall portion 2111 in the second direction Z. The second direction Z is perpendicular to the thickness direction X of the bottom plate and the first direction Y. The battery cell group 20 is correspondingly provided with two buffer members 60. The two buffer members 60 are spaced apart from each other in the second direction Z. In the thickness direction X of the bottom plate, one buffer member 60 covers the first electrode terminals 212 of the plurality of battery cells 21, and the other buffer member 60 covers the second electrode terminals 212 of the plurality of battery cells 21.

The battery cell group 20 is correspondingly provided with two buffer members 60. The two buffer members 60 are spaced apart from each other in the second direction Z, that is, two buffer members 60 are provided between each battery cell group 20 and the bottom plate 11, and the two buffer members 60 are spaced apart from each other in the second direction Z.

In the thickness direction X of the bottom plate, one buffer member 60 covers the first electrode terminals 212 of the plurality of battery cells 21, and the other buffer member 60 covers the second electrode terminals 212 of the plurality of battery cells 21. In other words, a plurality of electrode terminals 212 with the same polarity among the plurality of battery cells 21 in the battery cell group 20 share one buffer member 60, that is, the plurality of electrode terminals 212 with the same polarity among the plurality of battery cells 21 in the battery cell group 20 are covered by one buffer member 60 in the thickness direction X of the bottom plate.

It should be noted that in other embodiments, each battery cell group 20 may alternatively be correspondingly provided with only one buffer member 60, and one buffer member 60 covers the first electrode terminals 212 and second electrode terminals 212 of the plurality of battery cells 21 in the battery cell group 20 in the thickness direction X of the bottom plate.

In these embodiments, each battery cell 21 is provided with a first electrode terminal 212 and a second electrode terminal 212 with opposite polarities to respectively perform input or output for the positive and negative electrodes of the battery cell 21. Two buffer members 60 are correspondingly provided for each battery cell group 20, and one buffer member 60 covers the first electrode terminals 212 of the plurality of battery cells 21 while the other buffer member 60 covers the second electrode terminals 212 of the plurality of battery cells 21, so that the two buffer members 60 respectively provide buffering and protection for the first electrode terminals 212 and second electrode terminals 212 of the battery cells 21, featuring a simple structure that is easy to assemble.

According to some embodiments of this application, referring to FIG. 9, the buffer member 60 is connected to the busbar 40.

Optionally, the buffer member 60 and the busbar 40 may have various connection structures therebetween, such as adhesive connection, bolt screwing, or snap connection.

It should be noted that in other embodiments, the buffer member 60 may alternatively be a structure connected to the bottom plate 11, or a structure connected to both the bottom plate 11 and the busbar 40. Certainly, the buffer member 60 may alternatively be a structure located only between the bottom plate 11 and the busbar 40 and not connected to either the busbar 40 or the bottom plate 11.

In these embodiments, the buffer member 60 is connected to the busbar 40 to improve the reliability of the buffer member 60 disposed between the bottom plate 11 and the busbar 40. On one hand, this facilitates assembly of the buffer member 60 between the bottom plate 11 and the busbar 40, enabling the buffer member 60, the busbar 40, and the battery cell group 20 to be first assembled into a whole and then assembled into the box 10, which helps to reduce the assembly difficulty of the buffer member 60 and improve the assembly efficiency of the battery 100. On the other hand, this can alleviate the phenomenon that the buffer member 60 falls off from between the bottom plate 11 and the busbar 40, thereby improving the usage stability of the battery 100.

In some embodiments, the buffer member 60 is connected to the busbar 40 by adhesive.

For example, the buffer member 60 may be connected to the busbar 40 by glue, double-sided adhesive tape, hot melt adhesive, or the like.

In these embodiments, the buffer member 60 and the busbar 40 are connected by an adhesive connection structure. On one hand, this facilitates assembly and helps to reduce the connection difficulty between the buffer member 60 and the busbar 40. On the other hand, this allows the connection and assembly between the buffer member 60 and the busbar 40 not to affect the busbar 40, which helps to alleviate the phenomenon that the buffer member 60 damages the busbar 40.

According to some embodiments of this application, an elastic modulus of a material of the buffer member 60 is greater than or equal to 3 MPa and less than or equal to 100 MPa.

For example, the elastic modulus of the material of the buffer member 60 may be 3 MPa, 5 MPa, 8 MPa, 10 MPa, 12 MPa, 15 MPa, 18 MPa, 20 MPa, 25 MPa, 30 MPa, 35 MPa, 40 MPa, 45 MPa, 50 MPa, 55 MPa, 60 MPa, 65 MPa, 70 MPa, 75 MPa, 80 MPa, 85 MPa, 90 MPa, 95 MPa, 100 MPa, or the like.

For example, the material of the buffer member 60 may be rubber, silicone, plastic, or the like.

In these embodiments, the elastic modulus of the material of the buffer member 60 is greater than or equal to 3 MPa and less than or equal to 100 MPa. On one hand, the elastic modulus of the material of the buffer member 60 is set to be greater than or equal to 3 MPa to alleviate the phenomenon of poor effect of absorbing an impact force by the buffer member 60 due to the excessively soft buffer member 60, and alleviate the phenomenon of poor effect of the buffer member 60 in distributing and dispersing an impact force. On the other hand, the elastic modulus of the material of the buffer member 60 is set to be less than or equal to 100 MPa to alleviate the phenomenon that the buffer member 60 directly transmits a received impact force to the electrode terminals 212 due to excessively high rigidity of the buffer member 60, which helps to improve the buffering and protecting effect on the electrode terminal 212 by the buffer member 60.

According to some embodiments of this application, the buffer member 60 is made of an insulating material.

In these embodiments, arranging the buffer member 60 to be made of an insulating material allows the electrode terminals 212 of the battery cell 21 not to form an electrical circuit connection with the buffer member 60, thereby reducing the risk of short circuit inside the battery 100, and helping to improve the usage reliability of the battery 100.

According to some embodiments of this application, referring to FIGs. 3 and 5, the pressure relief mechanism 213 is disposed on the wall portion 2111. In a plane perpendicular to the thickness direction X of the bottom plate, an orthographic projection of the pressure relief mechanism 213 does not overlap with an orthographic projection of the buffer member 60.

In the plane perpendicular to the thickness direction X of the bottom plate, the orthographic projection of the pressure relief mechanism 213 does not overlap with the orthographic projection of the buffer member 60. In the thickness direction X of the bottom plate, the projection of the pressure relief mechanism 213 does not overlap with the projection of the buffer member 60, and the pressure relief mechanism 213 and the buffer member 60 do not overlap with each other.

In these embodiments, the pressure relief mechanism 213 and the buffer member 60 are disposed with their orthographic projections in the plane perpendicular to the thickness direction X of the bottom plate not overlapping, so that the buffer member 60 does not cover or block the pressure relief mechanism 213 in the thickness direction X of the bottom plate, thereby reducing the blocking and interference of the buffer member 60 on the pressure relief mechanism 213, and improving the smoothness of the pressure relief mechanism 213 when relieving an internal pressure of the battery cell 21.

According to some embodiments of this application, referring to FIGs. 2, 4, and 5, the box 10 may further include a top plate 12. The top plate 12 and the bottom plate 11 are opposite each other in the thickness direction X of the bottom plate and are respectively located on two sides of the battery cell 21. In the thickness direction X of the bottom plate, the housing 211 is connected to the top plate 12.

The top of the box 10 is a wall of the box 10 located above the battery cell 21 in the thickness direction X of the bottom plate, so that the top plate 12 and the bottom plate 11 are respectively located on two sides of the battery cell 21 in the thickness direction X of the bottom plate.

The housing 211 is connected to the top plate 12, that is, the battery cell 21 is suspended in the box 10, so that the gravity of the battery cell 21 acts on the top plate 12.

Optionally, the housing 211 of the battery cell 21 and the top plate 12 of the box 10 may have various connection structures therebetween, such as welding connection, adhesive connection, bolt screwing, or the like.

For example, in FIG. 5, a bottom wall of the housing body 2112 of the housing 211 opposite the wall portion 2111 in the thickness direction X of the bottom plate is connected to the top plate 12, that is, an end of the housing 211 farther away from the bottom plate 11 in the thickness direction X of the bottom plate is connected to the top plate 12.

In these embodiments, the housing 211 of the battery cell 21 is connected to the top plate 12 of the box 10 to realize a structure in which the battery cell 21 is suspended in the box 10. On one hand, a bearing force received by the bottom plate 11 can be reduced, which helps to improve the load-bearing effect of the bottom plate 11. On the other hand, the phenomenon that the battery cell 21 is pressed against the bottom plate 11 through the support member 30 can be alleviated, thereby optimizing the force condition of the support member 30, and further improving the supporting and protecting effect on the battery cell 21 by the support member 30 when the bottom plate 11 is impacted.

In some embodiments, the housing 211 is connected to the top plate 12 by adhesive.

For example, the housing 211 may be connected to the top plate 12 by glue, double-sided adhesive tape, hot melt adhesive, or the like.

In these embodiments, the housing 211 of the battery cell 21 and the top plate 12 of the box 10 are connected by an adhesive connection structure. On one hand, this facilitates assembly and helps to reduce the connection difficulty between the housing 211 of the battery cell 21 and the top plate 12 of the box 10. On the other hand, this allows the connection and assembly between the housing 211 of the battery cell 21 and the top plate 12 of the box 10 not to affect the battery cell 21, helping to alleviate the phenomenon that the battery cell 21 is damaged.

According to some embodiments of this application, referring to FIGs. 5, 6, and 7, the housing 211 may include a housing body 2112 and an end cover 2113. An accommodating cavity having an opening 2112a is formed inside the housing body 2112. The accommodating cavity is configured to accommodate the electrode assembly 214. The opening 2112a is located at an end of the housing body 2112 facing the bottom plate 11 in the thickness direction X of the bottom plate. The end cover 2113 closes the opening 2112a. The end cover 2113 is the wall portion 2111.

The end cover 2113 is the wall portion 2111, that is, at least one of the electrode terminals 212 or pressure relief mechanism 213 is assembled on the end cover 2113, and the end cover 2113 is disposed facing the bottom plate 11 in the thickness direction X of the bottom plate.

In these embodiments, the wall portion 2111 of the housing 211 is arranged as the end cover 2113 of the housing 211 used to close the opening 2112a. The battery cell 21 with such structure facilitates assembly of the electrode terminals 212 or pressure relief mechanism 213 on the end cover 2113, and can reduce the difficulty in electrical connection between the electrode terminals 212 and the electrode assembly 214, thereby helping to reduce the manufacturing difficulty of the battery cell 21 and improving the production efficiency of the battery cell 21.

It should be noted that the structure of the battery cell 21 is not limited thereto. In other embodiments, the battery cell 21 may alternatively have other structures. For example, the housing 211 may include a housing body 2112 and an end cover 2113. The housing body 2112 includes an integrally formed side wall and the wall portion 2111. The side wall surrounds the wall portion 2111. In the thickness direction X of the bottom plate, the side wall has one end connected to the wall portion 2111 and the other end enclosing an opening 2112a. The side wall and the wall portion 2111 jointly define an accommodating cavity for accommodating the electrode assembly 214. The end cover 2113 closes the opening 2112a. In other words, at least one of the electrode terminals 212 or pressure relief mechanism 213 is assembled on the bottom wall of the housing body 2112 opposite the end cover 2113 in the thickness direction X of the bottom plate, and the bottom wall of the housing body 2112 is disposed facing the bottom plate 11 in the thickness direction X of the bottom plate.

In these embodiments, the wall portion 2111 of the housing 211 is arranged as the bottom wall of the housing body 2112 opposite the end cover 2113 in the thickness direction of the wall portion 2111. The battery cell 21 with such structure can implement that a region of the housing 211 where the electrode terminals 212 or the pressure relief mechanism 213 is disposed is away from the end cover 2113. On one hand, this can alleviate the phenomenon that a pulling or twisting force exerted by other components on the electrode terminals 212 directly acts on the end cover 2113, reducing the risk of connection failure between the end cover 2113 and the housing body 2112, and helping to reduce the risk of liquid leakage of the battery cell 21 during use. On the other hand, this can alleviate the phenomenon that the stress generated by the connection between the end cover 2113 and the housing body 2112 acts on the pressure relief mechanism 213, alleviating the phenomenon that the pressure relief mechanism 213 is damaged or actuated to open the valve in advance, and further helping to prolong the service life and improve the usage reliability of the battery cell 21.

According to some embodiments of this application, this application further provides an electric apparatus. The electric apparatus includes the battery 100 in any one of the foregoing solutions. The battery 100 is configured to supply electrical energy to the electric apparatus.

The electric apparatus may be any one of the foregoing devices or systems using the battery 100.

According to some embodiments of this application, referring to FIGs. 2 to 9, this application provides a battery 100. The battery 100 includes a box 10, a battery cell group 20, a support member 30, a busbar 40, and a buffer member 60. The box 10 includes a bottom plate 11, a top plate 12, and a frame body 13. The frame body 13 is a hollow structure with both ends open in a thickness direction X of the bottom plate. The bottom plate 11 and the top plate 12 are opposite each other in the thickness direction X of the bottom plate, and the bottom plate 11 and the top plate 12 are respectively connected to two sides of the frame body 13 in the thickness direction X of the bottom plate, so that the bottom plate 11, the top plate 12, and the frame body 13 jointly define an assembly space for accommodating the battery cell group 20. A plurality of battery cell groups 20 are provided, and the plurality of battery cell groups 20 are all accommodated in the box 10. The plurality of battery cell groups 20 are arranged in a second direction Z. Each battery cell group 20 includes a plurality of battery cells 21 stacked in a first direction Y. The thickness direction X of the bottom plate, the first direction Y, and the second direction Z are perpendicular to each other. The battery cell 21 includes a housing 211, electrode terminals 212, a pressure relief mechanism 213, and an electrode assembly 214. The housing 211 has a wall portion 2111. The housing 211 includes a housing body 2112 and an end cover 2113. An accommodating cavity having an opening 2112a is formed inside the housing body 2112. The accommodating cavity is configured to accommodate the electrode assembly 214. The opening 2112a is located at an end of the housing body 2112 facing the bottom plate 11 in the thickness direction X of the bottom plate. The end cover 2113 closes the opening 2112a, and the end cover 2113 is the wall portion 2111. In the thickness direction X of the bottom plate, the wall portion 2111 is disposed facing the bottom plate 11, and an end of the housing 211 farther away from the bottom plate 11 is connected to the top plate 12 by adhesive. Both the electrode terminals 212 and the pressure relief mechanism 213 are disposed on the wall portion 2111. The electrode terminals 212 are electrically connected to the electrode assembly 214. The pressure relief mechanism 213 is configured to relieve an internal pressure of the battery cell 21. The battery cell 21 includes two electrode terminals 212 with opposite polarities. The two electrode terminals 212 are respectively a first electrode terminal 212 and a second electrode terminal 212. The first electrode terminal 212 and the second electrode terminal 212 are spaced apart from each other on the wall portion 2111 in the second direction Z. The busbar 40 connects the electrode terminals 212 of the plurality of battery cells 21 to electrically connect the plurality of battery cells 21. In the thickness direction X of the bottom plate, the busbar 40 is connected to ends of the electrode terminals 212 facing the bottom plate 11. The support member 30 is disposed between the wall portion 2111 and the bottom plate 11 and connected to the wall portion 2111 by adhesive. In the thickness direction X of the bottom plate, the support member 30 has a first surface 31 facing away from the wall portion 2111. The first surface 31 abuts against the bottom plate 11, and the first surface 31 is closer to the bottom plate 11 than the electrode terminals 212, the pressure relief mechanism 213, and the busbar 40. The support member 30 extends along the first direction Y, and the support member 30 is connected to the wall portions 2111 of the housings 211 of the plurality of battery cells 21 in the battery cell group 20. In the second direction Z, every two adjacent battery cell groups 20 share one support member 30, and the support member 30 is connected to the wall portions 2111 of the housings 211 of the battery cells 21 in the two adjacent battery cell groups 20. In a plane perpendicular to the thickness direction X of the bottom plate, an orthographic projection of the pressure relief mechanism 213 does not overlap with an orthographic projection of the support member 30. A cavity 32 is formed inside the support member 30, and the cavity 32 penetrates both ends of the support member 30 in the first direction Y. The support member 30 is made of an insulating material, and an elastic modulus of the material of the support member 30 is greater than or equal to 1000 MPa. Each battery cell group 20 is correspondingly provided with two buffer members 60. The buffer member 60 is disposed between the busbar 40 and the bottom plate 11, and the buffer member 60 is connected to a side of the busbar 40 facing the bottom plate 11 by adhesive. In the thickness direction X of the bottom plate, two sides of the buffer member 60 respectively abut against the busbar 40 and the bottom plate 11. One buffer member 60 covers the first electrode terminals 212 of the plurality of battery cells 21, and the other buffer member 60 covers the second electrode terminals 212 of the plurality of battery cells 21. In a plane perpendicular to the thickness direction X of the bottom plate, an orthographic projection of the pressure relief mechanism 213 does not overlap with an orthographic projection of the buffer member 60. The buffer member 60 is made of an insulating material, and an elastic modulus of the material of the buffer member 60 is greater than or equal to 3 MPa and less than or equal to 100 MPa.

It should be noted that in the case of no conflict, the embodiments in this application and the features in the embodiments may be combined with each other.

The foregoing descriptions are merely preferred embodiments of this application and are not intended to limit this application. Persons skilled in the art understand that this application may have various modifications and variations. Any modifications, equivalent replacements, and improvements made without departing from the spirit and principle of this application shall fall within the protection scope of this application.

## Claims

1. A battery, comprising:
a box comprising a bottom plate;
a battery cell group accommodated in the box, wherein the battery cell group comprises at least one battery cell, the battery cell comprises a housing, electrode terminals, and a pressure relief mechanism, the housing has a wall portion, the wall portion is disposed facing the bottom plate in a thickness direction of the bottom plate, both the electrode terminals and the pressure relief mechanism are disposed on the housing, and at least one of the electrode terminals and the pressure relief mechanism is disposed on the wall portion; and
a support member disposed between the wall portion and the bottom plate and connected to the wall portion;
wherein in the thickness direction of the bottom plate, the support member has a first surface facing away from the wall portion, and the first surface is closer to the bottom plate than the electrode terminals and the pressure relief mechanism.

2. The battery according to claim 1, wherein in the thickness direction of the bottom plate, the first surface abuts against the bottom plate.

3. The battery according to claim 1 or 2, wherein the battery cell group comprises a plurality of battery cells, the plurality of battery cells are stacked in a first direction, and the first direction is perpendicular to the thickness direction of the bottom plate;
wherein the support member extends along the first direction, and the support member is connected to the wall portions of the housings of the plurality of battery cells in the battery cell group.

4. The battery according to claim 3, wherein the battery comprises a plurality of battery cell groups, the plurality of battery cell groups are disposed in a second direction, and the second direction is perpendicular to the thickness direction of the bottom plate and the first direction;
wherein in the second direction, every two adjacent battery cell groups share one support member, and the support member is connected to the wall portions of the housings of the battery cells in the two adjacent battery cell groups.

5. The battery according to claim 3 or 4, wherein a cavity is formed inside the support member, and the cavity penetrates both ends of the support member in the first direction.

6. The battery according to any one of claims 1 to 5, wherein a cavity is formed inside the support member.

7. The battery according to any one of claims 1 to 6, wherein the support member is connected to the wall portion by adhesive.

8. The battery according to any one of claims 1 to 7, wherein an elastic modulus of a material of the support member is greater than or equal to 1000 MPa.

9. The battery according to any one of claims 1 to 8, wherein the support member is made of an insulating material.

10. The battery according to any one of claims 1 to 9, wherein the pressure relief mechanism is disposed on the wall portion;
wherein in a plane perpendicular to the thickness direction of the bottom plate, an orthographic projection of the pressure relief mechanism does not overlap with an orthographic projection of the support member.

11. The battery according to any one of claims 1 to 10, wherein both the electrode terminals and the pressure relief mechanism are disposed on the wall portion.

12. The battery according to any one of claims 1 to 11, wherein the electrode terminals are disposed on the wall portion;
wherein the battery further comprises a buffer member, and in the thickness direction of the bottom plate, the buffer member is disposed between the electrode terminals and the bottom plate, and at least part of projections of the electrode terminals are located within the buffer member.

13. The battery according to claim 12, wherein in the thickness direction of the bottom plate, the buffer member covers the electrode terminals.

14. The battery according to claim 12 or 13, wherein the battery further comprises:
a busbar disposed in the box, the busbar being connected to ends of the electrode terminals facing the bottom plate in the thickness direction of the bottom plate to be electrically connected to the battery cell;
wherein in the thickness direction of the bottom plate, the first surface is closer to the bottom plate than the busbar, and the buffer member is disposed between the busbar and the bottom plate.

15. The battery according to claim 14, wherein in the thickness direction of the bottom plate, two sides of the buffer member respectively abut against the busbar and the bottom plate.

16. The battery according to claim 14 or 15, wherein the battery cell group comprises a plurality of battery cells, the plurality of battery cells are stacked in a first direction, the busbar connects the electrode terminals of the plurality of battery cells, and the first direction is perpendicular to the thickness direction of the bottom plate;
wherein the buffer member extends along the first direction, and in the thickness direction of the bottom plate, the buffer member covers the electrode terminals of the plurality of battery cells.

17. The battery according to claim 16, wherein the battery cell comprises two electrode terminals with opposite polarities, the two electrode terminals are respectively a first electrode terminal and a second electrode terminal, the first electrode terminal and the second electrode terminal are spaced apart from each other on the wall portion in a second direction, and the second direction is perpendicular to the thickness direction of the bottom plate and the first direction;
wherein the battery cell group is correspondingly provided with two buffer members, the two buffer members are spaced apart from each other in the second direction, and in the thickness direction of the bottom plate, one buffer member covers the first electrode terminals of the plurality of battery cells, and the other buffer member covers the second electrode terminals of the plurality of battery cells.

18. The battery according to any one of claims 14 to 17, wherein the buffer member is connected to the busbar.

19. The battery according to claim 18, wherein the buffer member is connected to the busbar by adhesive.

20. The battery according to any one of claims 12 to 19, wherein an elastic modulus of a material of the buffer member is greater than or equal to 3 MPa and less than or equal to 100 MPa.

21. The battery according to any one of claims 12 to 20, wherein the buffer member is made of an insulating material.

22. The battery according to any one of claims 12 to 21, wherein the pressure relief mechanism is disposed on the wall portion;
wherein in a plane perpendicular to the thickness direction of the bottom plate, an orthographic projection of the pressure relief mechanism does not overlap with an orthographic projection of the buffer member.

23. The battery according to any one of claims 1 to 22, wherein the box further comprises:
a top plate opposite the bottom plate in the thickness direction of the bottom plate, with the top plate and the bottom plate respectively located on two sides of the battery cell;
wherein in the thickness direction of the bottom plate, the housing is connected to the top plate.

24. The battery according to claim 23, wherein the housing is connected to the top plate by adhesive.

25. The battery according to any one of claims 1 to 24, wherein the housing comprises:
a housing body with an accommodating cavity having an opening formed inside, wherein the accommodating cavity is configured to accommodate an electrode assembly, and the opening is located at an end of the housing body facing the bottom plate in the thickness direction of the bottom plate; and
an end cover closing the opening;
wherein the end cover is the wall portion.

26. The battery according to any one of claims 1 to 24, wherein the housing comprises:
a housing body comprising an integrally formed side wall and the wall portion, wherein the side wall surrounds the wall portion, in the thickness direction of the bottom plate, the side wall has one end connected to the wall portion and the other end enclosing an opening, and the side wall and the wall portion jointly define an accommodating cavity for accommodating an electrode assembly; and
an end cover closing the opening.

27. An electric apparatus, comprising the battery according to any one of claims 1 to 26, wherein the battery is configured to supply electrical energy.
